# EUROPEAN PATENT SPECIFICATION

(11) **EP 3 407 221 B1**
(45) Date of publication and mention of the grant of the patent: **23.08.2023**
(21) Application number: 18174459.0
(22) Date of filing: 26.05.2018
(51) Int. Cl.: G06F 3/0482, G06F 16/00, G06F 16/951

(54) **METHODS AND DEVICES FOR SEARCHING AND DISPLAYING INFORMATION ON A TERMINAL**
VERFAHREN UND VORRICHTUNGEN ZUM SUCHEN UND ANZEIGEN VON INFORMATIONEN AUF EINEM ENDGERÄT
PROCÉDÉS ET DISPOSITIFS POUR RECHERCHER ET AFFICHER DES INFORMATIONS SUR UN TERMINAL

(30) Priority: 27.05.2017 CN 201710392518
(43) Date of publication of application: 28.11.2018
(73) Proprietor: Beijing Xiaomi Mobile Software Co., Ltd., Beijing 100085 (CN)
(72) Inventor: LU, Yizhan, Haidian District, Beijing 100085 (CN); LONG, Hai, Haidian District, Beijing 100085 (CN); LIU, Fang, Haidian District, Beijing 100085 (CN)
(74) Representative: Hughes, Andrea Michelle

(56) References cited:
- CN-A- 106 293 480
- US-B1- 9 582 482
- David Deutsch: "Responsive Demo - Owl Carousel", , 26 May 2014 (2014-05-26), XP055514432, Retrieved from the Internet: URL:https://owlcarousel2.github.io/OwlCaro usel2/demos/responsive.html [retrieved on 2018-10-11]

## Description

### TECHNICAL FIELD

The present disclosure relates to the field of human-machine interaction, particularly to methods and devices for searching and displaying information on a terminal.

### BACKGROUND

A user who utilizes an application program on a terminal usually will search in an interested text displayed on a user interface of the application program. The terminal may be a mobile phone, a tablet PC, an e-book reader, and the like.

A typical searching process may include steps of: firstly, the user presses and holds on an interested text when catching sight of the text on the user interface of the application program; secondly, the terminal pops out a "copy" toolbar, upon receiving a press-and-hold signal, for the user to click on a "copy" button in the "copy" toolbar; thirdly, the user quits the application program and returns to a desktop window; fourthly, the user finds and opens a browser in the desktop window; fifthly, the user opens a searching website in the browser; sixthly, the user pastes the interested text into a searching box of the browser for searching, so that the browser displays searching result information related to the interested text.

As shown above, the user has to perform a total of six steps to complete a single searching process, which results in an extremely tedious operation flow for the user, with relatively poor efficiency of human-machine interaction.

US9582482 B1 discloses capturing a terminal screen upon detection of a user input, analysing the captured screen to extract content information and keywords, and performing a search based on those information to find related content. The search result is then displayed in a superposed manner over the current screen. The user can interact with the search result,

### SUMMARY

In order to solve problems in related technologies that an operation flow of user is extremely tedious and that an efficiency of human-machine interaction is relatively poor, the present disclosure provides an information display method, an information display device, and a terminal. Technical solutions are described as below provide more efficient searching methods and better displaying methods.

According to a first aspect of the present disclosure, a terminal is provided as claimed in claim 1.

According to an aspect of the present disclosure, a method is provided as claimed in claim 13.

According to an aspect a computer-readable storage medium is provided as claimed in claim 14.

### BRIEF DESCRIPTION OF THE DRAWINGS

Hereinafter the drawing to be referred in the description of the embodiments will be briefly introduced. Obviously, the drawings explained in the description as below merely illustrate several embodiments of the present disclosure. For those skilled in the art, other ones may be achieved based on these drawings without paying any inventive labor.
Fig. 1 is block diagram illustrating an information display system provided by an aspect of the present disclosure;
Fig. 2 is a flow chart illustrating an information display method provided by an aspect of the present disclosure;
Fig. 3A shows schematic diagrams illustrating user interfaces when implementing the information display method provided by an aspect of the present disclosure;
Fig. 3B shows schematic diagrams illustrating user interfaces when implementing the information display method provided by an aspect of the present disclosure;
Fig. 3C shows schematic diagrams illustrating user interfaces when implementing the information display method provided by an aspect of the present disclosure;
Fig. 4 is a flow chart illustrating an information display method provided by another aspect of the present disclosure;
Fig. 5A shows schematic diagrams illustrating user interfaces when implementing an information display method provided by an aspect of the present disclosure;
Fig. 5B shows schematic diagrams illustrating user interfaces when implementing an information display method provided by an aspect of the present disclosure;
Fig. 6 is a block diagram illustrating a terminal provided by an aspect of the present disclosure;
Fig. 7 is a flow chart illustrating an information display method provided by another aspect of the present disclosure;
Fig. 8 is a flow chart illustrating an information display method provided by another aspect of the present disclosure;
Fig. 9 is a block diagram illustrating a server provided by an aspect of the present disclosure;
Fig. 10 is a flow chart illustrating an information display method provided by another aspect of the present disclosure;
Fig. 11 is a flow chart illustrating an information display method provided by another aspect of the present disclosure;
Fig. 12 is a flow chart illustrating an information display method provided by another aspect of the present disclosure;
Fig. 13 is a flow chart illustrating an information display method provided by another aspect of the present disclosure;

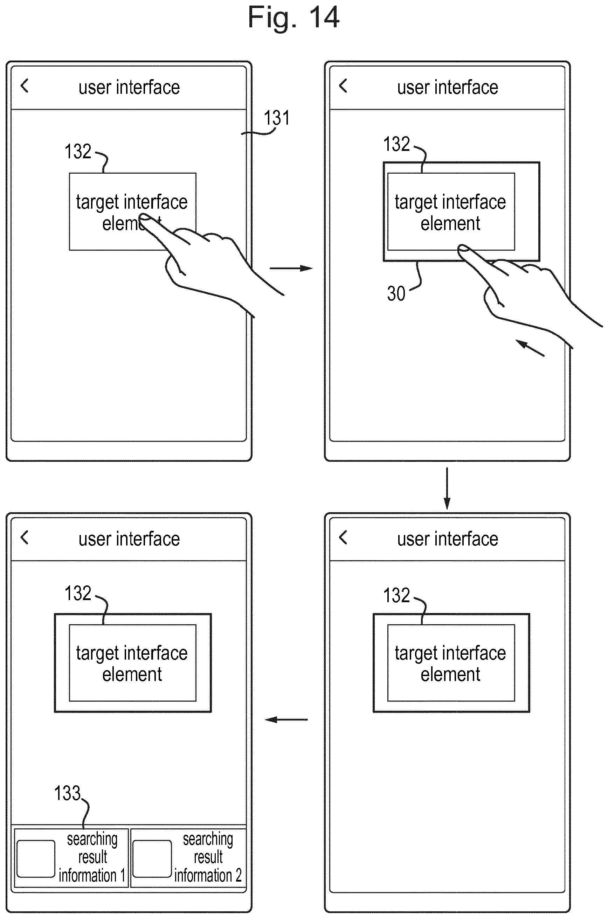

Fig. 14 is a schematic diagram illustrating an interface when implementing an information display method provided by an aspect of the present disclosure;
Fig. 15 is a flow chart illustrating an information display method provided by another aspect of the present disclosure;
Fig. 16A shows schematic diagrams illustrating user interfaces when implementing an information display method provided by another aspect of the present disclosure;
Fig. 16B shows schematic diagrams illustrating user interfaces when implementing an information display method provided by another aspect of the present disclosure;
Fig. 17 is a schematic diagram illustrating an interface when implementing an information display method provided by another aspect of the present disclosure;
Fig. 18 is a flow chart illustrating an information display method provided by another aspect of the present disclosure;
Fig. 19 is a schematic diagram illustrating an interface when implementing an information display method provided by another aspect of the present disclosure; and
Fig. 20 is a block diagram illustrating an information display device provided by another aspect of the present disclosure.

### DETAILED DESCRIPTION

Hereinafter the embodiments of the present disclosure will be described in further details in conjunction with the drawings, in order to make objectives, technical solutions and advantageous of the present disclosure more apparent.

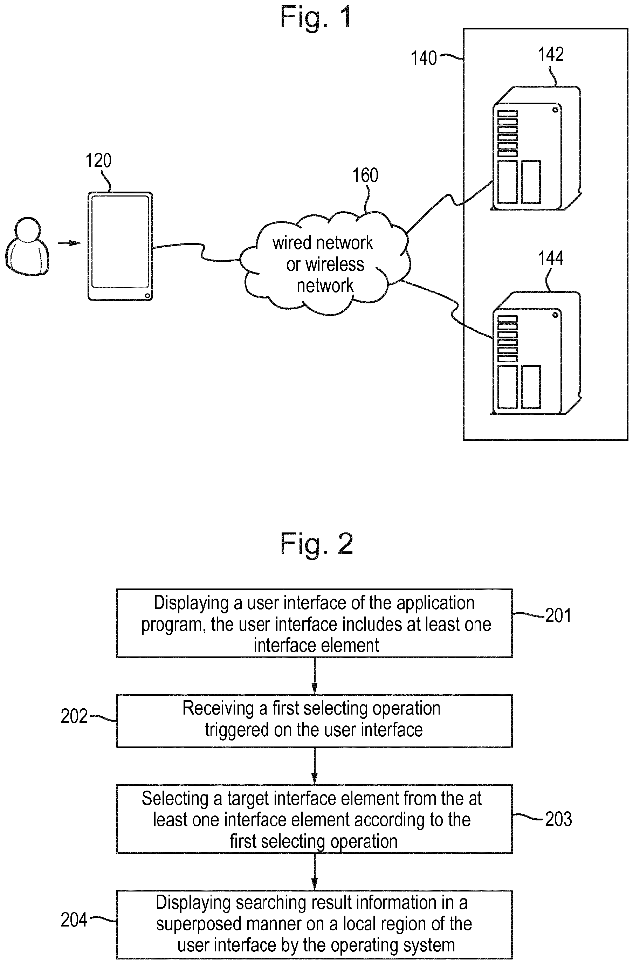

Fig. 1 is a block diagram illustrating an information display system provided by an aspect of the present disclosure. The system includes a terminal 120 and a server 140. The terminal 120 and the server 140 are connected through a communication network 160.

The terminal 120 may be a smartphone, a tablet PC, an e-book reader, a laptop PC, a desktop PC, and the like. Optionally, the terminal 120 is provided with a touch screen, which is a common touch screen, or a suspension-touch screen, or a force-touch screen. The terminal 120 is installed with an operating system and at least one application program. The operating system may be an Android operating system or an Apple (IOS) operating system.

The terminal 120 and the server 140 are connected through a communication network which may be a wired network or a wireless network. The wired network may be a metropolitan area network, a local area network, a fiber optical network and the like. The wireless network may be a mobile communication network or a wireless fidelity (WiFi) network.

The server 140 may be a server for providing searching service and searching result information; and may also be an image processing server for providing image processing service at the same time. Optionally, the server 140 includes a searching server 142 and a webpage server 144. The searching server 142 is provided by a manufacturer corresponding to the operating system and used for providing searching service; the webpage server 144 is used for providing a webpage corresponding to the searching result information and may be provided by a manufacturer of a third-party application program. The term "third-party" in the present disclosure refers to yet another party except the user and the operating system, without excluding the possibility that the third party and the provider of the operating system actually are a same organization. In case of multiple or multiple types of third-party application programs, the webpage server 144 may also be arranged in plural forms.

Fig. 2 is a flow chart illustrating an information display method provided by an aspect of the present disclosure. Description will be given with reference to the information display method applied in a terminal including an operating system and at least one application program, by way of example. The method includes steps as below.

In step S201: displaying a user interface of the application program, the user interface includes at least one interface element.

The application program installed in the terminal includes a native application program provided by the operating system and/or a third-party application program installed by the user. In the present disclosure, an application program may refer to any application program installed in the operating system or an application program belonging to a preset list.

An application program usually includes multiple user interfaces. The user interface of the application program running in the foreground of the terminal will be displayed on the display screen of the terminal preferentially.

The user interface includes at least one interface element thereon, and every interface element is of the portions constituting the user interface. The interface element includes, but not limited to, at least one of a text, a picture, an audio and a video.

In step S202: receiving a first selecting operation triggered on the user interface.

The first selecting operation includes, but not limited to, at least one of a press-and-hold operation, a force-touch operation, a multi-click operation, a suspension-touch operation and a double-finger touch operation.

The press-and-hold operation is an operation of pressing against a touch screen for a duration time longer than a first duration time. The force-touch operation is an operation of exerting a pressure larger than a threshold pressure. The multi-click operation is an operation of clicking for a preset amount of times within a preset time interval. The suspension-touch operation is an operation of suspending above a touch screen for a duration time longer than a second duration time. The double-finger touch operation is an operation of clicking on the touch screen by using two fingers of the user at the same time.

In step S203: selecting a target interface element from the at least one interface element according to the first selecting operation.

The target interface element is one selected from the at least one interface element (without excluding the possibility of two or more target interface elements). For example, the target interface element is a text and/or a picture. The target interface element is provided with content information. When the target interface element is a text, the content information is a character; when the target interface element is a picture, the content information is image data.

In step S204, displaying searching result information in a superposed manner on a local region of the user interface by the operating system, the searching result information is corresponding to the target interface element. For example, the searching result information may include search results using the content information as input to a search engine. The searching result information may include local results from the local storage of the terminal, or from a local area network. Alternatively or additionally, the searching result information may include results from the a public network such as the Internet.

The terminal displays the searching result information in a superposed manner on a local region of the user interface by the operating system. The searching result information is provided in an amount of n, in which at least two pieces of searching result information are different from each other, and n is a positive integer. Optionally, n≥2.

For example, the searching result information may include at least one type of person name information, site name information, WIKI information, navigation information, journey information, user comment information, shopping information and website information.

Optionally, the searching result information is originated from at least two different websites.

In one or more embodiments, the local region is any one of a bottom region, a top region, a left border region, a right border region, an adjacent region of the target interface element and an adjacent region of an operating coordinate of the selecting operation. The local region is a part of an entire display region of the display screen, generally a portion of the entire display region not covering the target interface element. Optionally, if the display screen includes a main screen and an auxiliary screen, then the local region is a region where the auxiliary screen is located.

Illustratively, when the local region is a bottom region of the display screen, it may reduce the coverage of the local region relative to the user interface as far as possible, especially the coverage of the local region relative to the target interface element. At the same time, compared to the solution in which the local region is a top region, displaying the searching result information on the bottom region may also prevent the user from being confused by the searching result information and a notification normally displayed on the top region.

When the local region is an adjacent region of the target interface element, it's convenient for the user to read the searching result information which is matched with the target interface element, without the need of frequently switching between visual focuses of the user. The adjacent region of the target interface element may be displayed directly next to the target interface element.

When the local region is an adjacent region of a position of the selecting operation, it's convenient for the user to take a next operation to the searching result information; for example, after the selecting operation, it may be possible to switch between different types of searching result information in a sliding manner, nearby, through a sliding operation. The adjacent region of the position of the selecting operation may be displayed directly next to the position of the selecting operation.

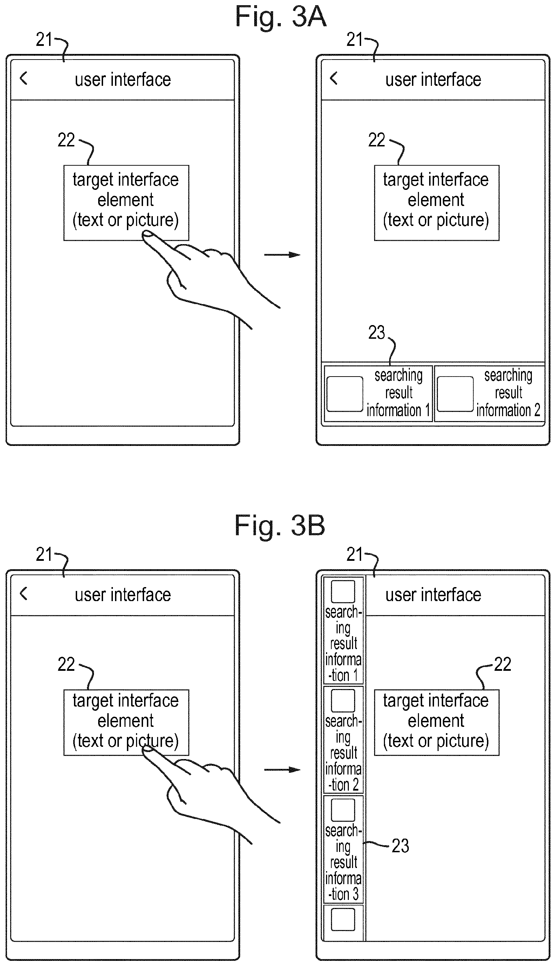

Fig. 3A illustrates an example that the local region is a bottom region. In Fig. 3A, a target interface element 22 that the user is interested in is shown in the user interface 21. The target interface element 22 may be a text or a picture. When the user presses and holds on the target interface element 22, the terminal displays a plurality of pieces of searching result information 23 on the bottom region which is an adjacent region of a bottom edge of the display region. The searching result information 23 may be provided in plural pieces, thus the terminal may only display a part of the searching result information 23 due to size restriction of the display region; for example, the terminal may only display searching result information 1 and searching result information 2.

Fig. 3B illustrates an example that the local region is a left border region. As shown in Fig. 3B, a target interface element 22 that the user is interested in is existed in the user interface 21. The target interface element 22 is a text or a picture. When the user presses and holds on the target interface element 22, the terminal displays n pieces of searching result information 23 on the left border region which is an adjacent region of a left edge of the display region. The searching result information 23 may be provided in plural pieces, thus the terminal may only display a part of the searching result information 23 due to size restriction of the display region; for example, the terminal may only display searching result information 1, searching result information 2 and searching result information 3.

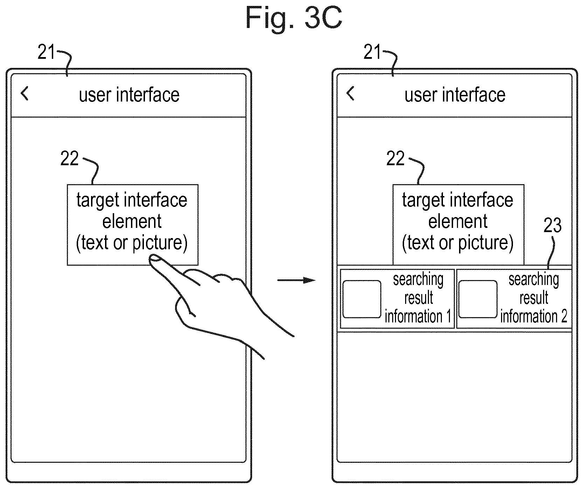

In case that the local region is an adjacent region of the target interface element, by way of example, as it can be seen in conjunction with Fig. 3C, a target interface element 22 that the user is interested in is existed in the user interface 21. The target interface element 22 is a text or a picture. When the user presses and holds on the target interface element 22, the terminal displays n pieces of searching result information 23 on the adjacent region of the target interface element, which is an adjacent region of an edge of the target interface element. The searching result information 23 may be provided in plural pieces, thus the terminal may only display a part of the searching result information 23 due to size restriction of the display region; for example, the terminal may only display searching result information 1 and searching result information 2.

As mentioned above, the information display method provided by the present disclosure is capable of directly displaying n pieces of searching result information in a superposed manner on a local region of a user interface by an operating system, upon the terminal receiving a selecting operation. In this way, from the point of view of the user, the searching result information corresponding to the target interface element can be obtained simply by a small number of operations, so that the total six searching steps required in related technologies may be simplified, which reduces the operation times during searching and improves the efficiency of human-machine interaction.

Moreover, the n pieces of searching result information are added by the operating system, thus the information display method provided by the present disclosure always can execute the application program no matter it's a native application program provided by the operating system or a third-party application program installed by the user; in other words, the user is provided with a capacity of globally searching within the terminal, which improves the application range of the present information display method.

Optionally, the above-mentioned n pieces of searching result information are obtained through searching in the data of at least two different websites, so that the preferred contents among different websites may be displayed in series on a local region of the application program by the operating system without the need of switching and transiting between multiple application programs by the user constantly.

It should be explained that the information display method provided by the present disclosure may be applied in searching services of the user interface in any type of application programs. The searching result information includes at least one of text introduction information, an entrance of local application program and an entrance of network service.

Illustratively, if the content information of the target interface element includes a title of film and television work, then the searching result information includes, but not limited to, at least one of: introduction information of the film and television work; rating information of the film and television work; author information of the film and television work; a subscribing entrance of the film and television work in a local application program or on a network service; a sharing entrance of the film and television work in the local application program or the network service; a favorites entrance of the film and television work in the local application program; and a ticket-booking entrance of the film and television work in the network service.

If the content information of the target interface element includes a title of literature work, then the searching result information includes, but not limited to, at least one of: introduction information of the literature work; rating information of the literature work; author information of the literature work; a subscribing entrance of the literature work in the local application program; a sharing entrance of the literature work in the local application program; a favorites entrance of the literature work in the local application program; a reading experience entrance of the literature work in the network service; and a purchasing entrance of the literature work in the network service.

If the content information of the target interface element includes information of a person, then the searching result information includes, but not limited to, at least one of: WIKI information of the person; a social network service homepage of the person in the network service; latest news and trends of the person in the network service; a dynamic subscribing entrance of the person in the network service; a sharing entrance of the person in the local application program or the network service; and a favorites entrance of the person in the local application program or the network service.

If the content information of the target interface element includes information of a site, then the searching result information includes, but not limited to, at least one of: introduction information of the site; navigation information of the site in the local application program or the network service; map preview information of the site in the local application program or the network service; a taxi-calling entrance with the site as a destination; a sharing entrance of the site in the local application program or the network service; and a favorites entrance of the site in the local application program or the network service.

If the content information of the target interface element includes information of a merchant, then the searching result information includes, but not limited to, at least one of: introduction information of the merchant; a social network service homepage of the merchant in the network service; latest news and trends of the merchant in the network service; a preferential subscribing entrance of the merchant in the network service; contact information of the merchant; navigation information of the merchant in the local application program or the network service; map preview information of the merchant in the local application program or the network service; a taxi-calling entrance with the merchant as a destination; a sharing entrance of the merchant in the local application program or the network service; and a favorites entrance of the merchant in the local application program or the network service.

If the content information of the target interface element includes information of a commodity, then the searching result information includes, but not limited to, at least one of: introduction information of the commodity; a purchasing entrance of the commodity in the network service; price information of the commodity in at least one shopping channel; a preferential subscribing entrance of the commodity in the network service; a discount reminding entrance of the commodity in the network service; a history price trend checking entrance of the commodity in the local application program or the network service; a sharing entrance of the commodity in the local application program or the network service; and a favorites entrance of the commodity in the local application program or the network service.

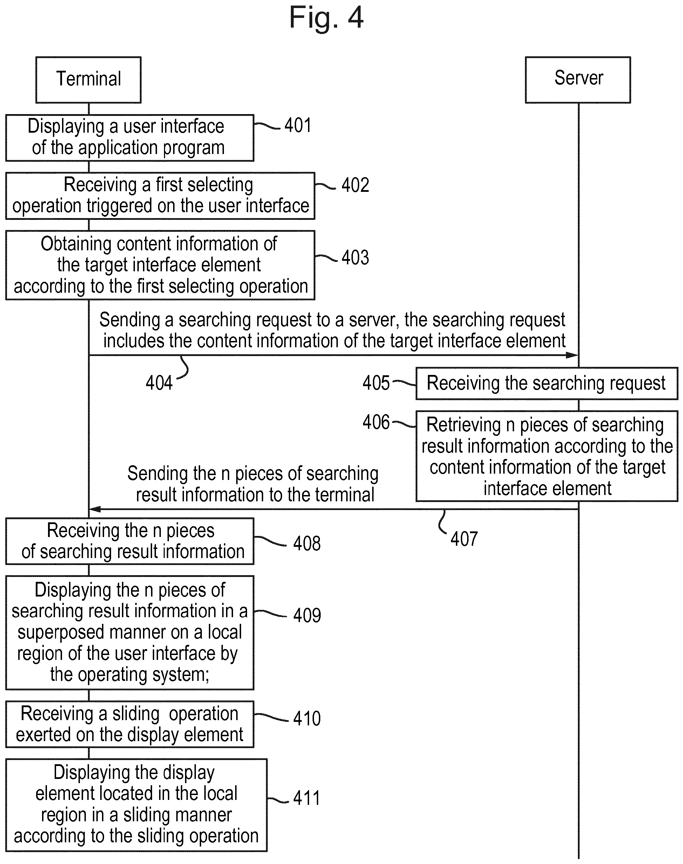

The above-mentioned searching result information may be obtained by searching through the server upon the terminal sending the content information of the target interface element to the server, without excluding the possibility that the terminal may perform searching in the data stored by itself according to the content information. Illustratively, Fig. 4 is a flow chart illustrating an information display method provided by another aspect of the present disclosure. The present embodiment will be described with reference to the case where the information display method is applied between the terminal and the server illustrated in Fig. 1, by way of example. The method includes steps as below.

In step S401: the terminal displays a user interface of the application program, the user interface includes at least one interface element.

When operated by a user, the terminal always can display a user interface of the application program on the display screen thereof, no matter the user is operating a native application program provided by the operating system or a third-party application program installed by the user himself.

An application program usually includes multiple user interfaces. The user interface of an application program running in the foreground of the terminal will be displayed in the display screen of the terminal preferentially.

The user interface includes at least one interface element thereon, and every interface element is one of portions constituting the user interface. The interface element includes, but not limited to, at least one of a text, a picture, an audio and a video.

In step S402: the terminal receives a first selecting operation triggered on the user interface, the first selecting operation is used for selecting a target interface element from the at least one interface element.

Referring to the first selecting operation which is a press-and-hold operation, by way of example, the user may press and hold on an interested interface element. The terminal receives the press-and-hold operation triggered by the user through a touch screen. The press-and-hold operation is used for selecting the target interface element on the user interface.

Optionally, the press-and-hold operation may generate a touching event in the operating system. The touching event includes an operating coordinate of the press-and-hold operation, and the operating coordinate is used for indicating a position of the selecting operation on the display screen. A coordinate system where the operating coordinate is located has a horizontal axis parallel to a horizontal edge of the display screen, and a vertical axis parallel to a vertical edge of the display screen.

Optionally, the target interface element is one (or more than one) interface element on the user interface. The target interface element usually is a text and/or a picture.

In step S403: the terminal obtains content information of the target interface element according to the first selecting operation.

The operating system in the terminal obtains the content information of the target interface element according to the first selecting operation. When the target interface element is a text, the content information is a character; when the target interface element is a picture, the content information is image data.

In step S404: the terminal sends a searching request to a server, the searching request includes the content information of the target interface element.

The terminal sends the searching request to the server over wired network or wireless network, the searching request includes the content information of the target interface element.

In step S405: the server receives the searching request.

In step S406: the server retrieves n pieces of searching result information according to the content information of the target interface element.

When the content information of the target interface element is a text, the server decomposes the text into several candidate items; selects a searching keyword from the several candidate items; and retrieves n pieces of searching result information according to the searching keyword.

When the content information of the target interface element is image data, the server performs an optical character recognition (OCR) to the image data; decomposes a text recognized by the OCR into several candidate items; selects a searching keyword from the several candidate items; and retrieves n pieces of searching result information according to the searching keyword. Or, when the content information of the target interface element is image data, the server performs an image recognition to the image data; obtains a recognition result in a form of text according to at least one of an article name, an article category or an article property as recognized; and retrieves n pieces of searching result information by using the recognition result as a searching keyword.

In step S407: the server sends the n pieces of searching result information to the terminal.

The server sends the n pieces of searching result information to the terminal over wired network or wireless network.

In step S408: the terminal receives the n pieces of searching result information.

In step S409: the terminal displays the n pieces of searching result information in a superposed manner on a local region of the user interface by the operating system, n is a positive integer.

The display element performs displaying under a control of the operating system, thus it has a display level higher than that of the user interface. Generally, when a first display element has a higher display level than a second display element, the first display element will be shown in front of the second display element. In other words, the first display element may cover at least partially the second display element if they overlap. Every display element is used for displaying at least one piece of searching result information thereon. The display element may be in a form of card. Illustratively, the display element may be presented in a shape of rectangular in which a text and/or an icon are/is displayed. Optionally, the text is used for indicating the searching result information, and the icon is used for indicating an information provider of the searching result information.

Optionally, the local region is a bottom region. Referring to Fig. 3A, a target interface element 22 that the user is interested in is existed in the user interface 21, and the target interface element 22 is a text or a picture. When the user presses and holds on the target interface element 22, the terminal displays n display elements 23 on the bottom region, and each of the display elements is used for displaying at least one piece of searching result information. The bottom region is an adjacent region of a bottom edge of the display region. The searching result information may be provided in plural pieces, thus the terminal may only display a part of the display elements 23 due to size restriction of the display region of the terminal.

Optionally, the n display elements are arranged sequentially along a first direction on the local region of the user interface. In Fig. 3, the first direction is illustrated as a direction from the left to the right, and a tail of an i^{th} display element is connected to a header of an (i+1)^{th} display element, i is a positive integer and i<n-1. The term "connected" may refer to that the tail of the i^{th} display element is overlapped with the header of the an (i+1)^{th} display element, or may be connected with a preset spacing.

Optionally, the n display elements perform displaying by using a list-view control unit, and each of the display elements is one of list items in the list view. The list view includes n display elements which are arranged horizontally and sequentially along a first direction, and a tail of an i^{th} display element is connected to a header of an (i+1)^{th} display element, i^2 and i≤n-1. The n display elements may also be displayed in a sliding manner according to a sliding operation, to hide a portion of the list items sliding off the display region of the display screen and display a portion of the list items sliding into the display region of the display screen.

Optionally, in order to prevent from blocking a main region of the user interface, an area of the display elements is smaller than one half of an entire display region of the display screen.

In step S410: the terminal receives a sliding operation exerted on the display element.

The user may slide the display element located in the local region. The sliding operation includes a first sliding operation of sliding along a first direction, and/or, a second sliding operation of sliding along a second direction. The first direction is opposite to the second direction.

When the display element adopts a display mode illustrated in Fig. 3A, the first sliding operation is an operation of sliding from the left to the right, and the second sliding operation is an operation of sliding from the right to the left.

In step S411: the terminal displays the display element located in the local region in a sliding manner according to the sliding operation.

Optionally, the terminal receives a first sliding operation triggered on an i^{th} display element, and the first sliding operation is an operation of sliding along the first direction. The terminal slides the i^{th} display element along the first direction according to the sliding operation to hide a portion sliding off the display screen; and slides an (i-1)^{th} display element along the first direction according to the sliding operation to display a portion sliding into the display screen.

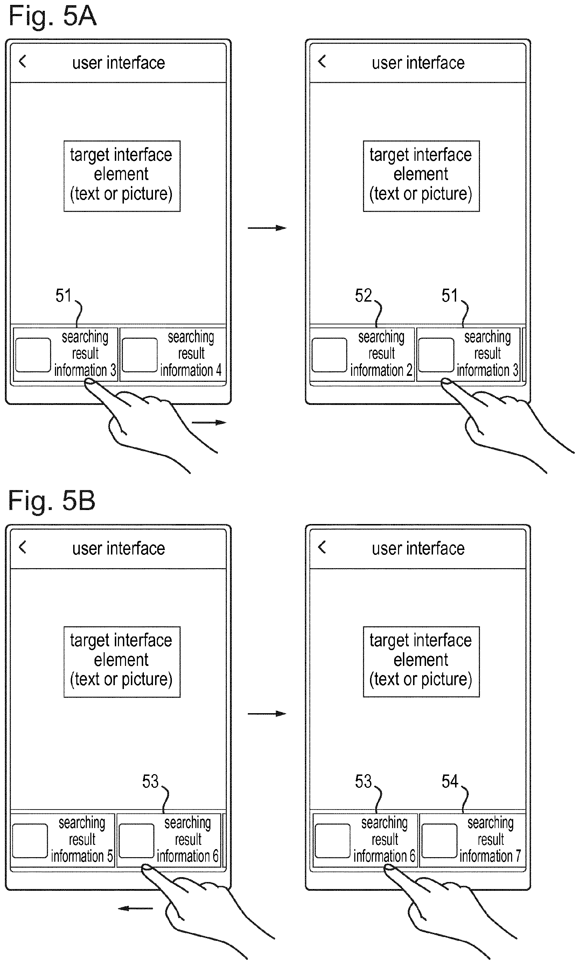

Referring to Fig. 5A, the terminal receives a rightward sliding operation triggered on a third display element 51. The terminal slides the third display element 51 along a rightward direction in the local region to hide a portion sliding off the display region of the display screen, and slides a second display element 52 along a rightward direction in the local region to display the second display element 52 sliding into the display region of the display screen.

Optionally, the terminal receives a second sliding operation triggered on the i^{th} display element, and the second sliding operation is an operation of sliding along a second direction. The terminal slides the i^{th} display element along the second direction according to the sliding operation to hide a portion sliding off the display screen; and slides the (i+1)^{th} display element along the second direction according to the sliding operation to display a portion sliding into the display screen.

Referring to Fig. 5B, the terminal receives a leftward sliding operation triggered on a sixth display element 53. The terminal slides the sixth display element 53 along a leftward direction in the local region to hide a portion (a fifth display element) sliding off the display region of the display screen; and slides a seventh display element 54 along a leftward direction in the local region to display a portion (the seventh display element 54) sliding into the display region of the display screen.

In some embodiments, the application program running in the foreground of the terminal is a business review APP, and the user interface running in the foreground is a food introduction page of Beijing Ducky provided by a merchant "X". When a user presses and holds on a target interface element that "Beijing ducky is one of traditional delicacies originated from Beijing. The Beijing ducky prepared by merchant X is striving for tender meat which is fat but not greasy", the terminal sends the text content of the target interface element as provided to the server, which feeds back four pieces of searching result information, i.e., WIKI information of Beijing ducky, introduction of shops under the name of merchant X, navigation information concerning the merchant X, and online shopping information of Beijing ducky. Consequently, the terminal respectively displays the four pieces of searching result information through four display elements. Due to restriction of the width of the display screen, the terminal may display two pieces of searching result information at the same time, and the user may slide the respective pieces of searching result information for review by utilizing a sliding operation.

As mentioned above, the information display method provided by embodiments of the present disclosure determines the content information of the target interface element through the terminal and sends the searching request carried with the content information to the server, which retrieves and feeds back n pieces of searching result information corresponding to the target interface element; so as to provide diversified searching result information to the user by means of massive information on the server. Such searching result information may be originated from variety of websites so that the terminal may display variety of searching result information relatively rapidly, thereby improving the information acquisition speed for the user.

The information display method provided by embodiments of the present disclosure further displays a display element located in the local region in a sliding manner according to a sliding operation when receiving the sliding operation triggered on the display element through the terminal; in this way, several pieces of searching result information may be displayed on the local region with limited area to improve the display utilization ratio of the local region.

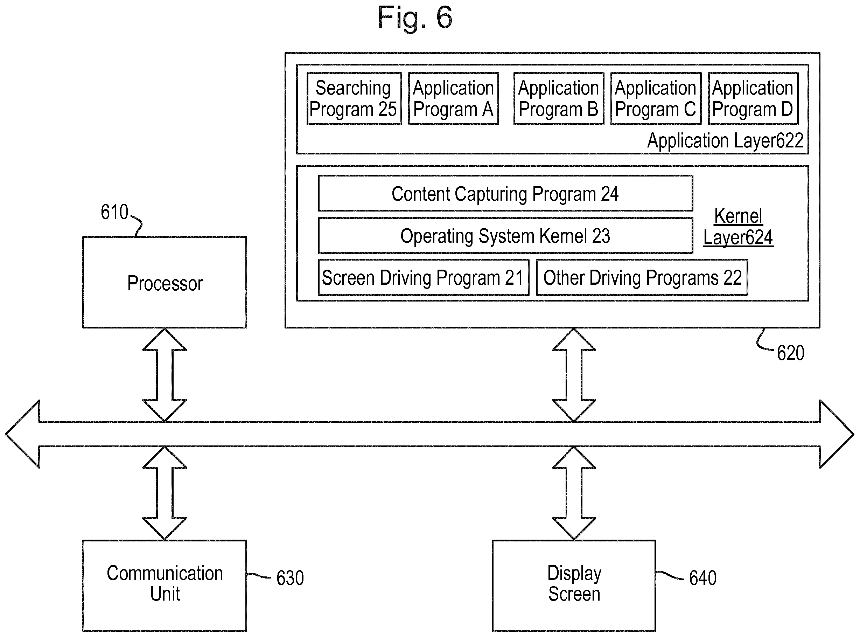

Fig. 6 is a schematically structural view illustrating a terminal provided by an aspect of the present disclosure. The terminal includes a processor 610, a memory 620, a communication unit 630 and a display screen 640.

The processer 610 includes one or more processing kernels.

The memory 620 is configured to store program instructions and/or data; the processer 610 is configured to execute the program instructions in the memory 620 so as to realize various functional applications and data processes. Optionally, the program instructions stored in the memory 620, when executed, are configured to implement steps in the information display method provided by embodiments of the present disclosure which are performed by the terminal. The memory 620 may include high-speed random access memory (RAM), and may also include nonvolatile memory; for example, at least one disk storage, flash memory device or other volatile solid-state memories.

The communication unit 630 is configured to realize a communication with the server. The communication unit 630 may be a wireless communication unit such as radio frequency (RF) circuit, mobile communication chip and WiFi communication chip. The communication unit 630 may also be wired communication unit such as Fiber, and RJ45 network card and interface.

The display screen 640 is configured to display the user interface and receive touching operations which are input from the outside. Optionally, the display screen is a touch screen which may acquire touching operations exerted by the user on the touch screen or adjacent to the touch screen. Optionally, the touch screen is a touch screen which supports a suspension touch and/or a force touch.

Optionally, the program instructions stored in the memory 620 include an application layer 622 and a kernel layer 624. The application layer 622 is located above the kernel layer 624; and the application layer 622 includes at least one application program. The kernel layer 624 includes a screen driving program 21, other driving programs 22, an operating system kernel 23, and a content capturing program 24. Illustratively, the application layer 622 includes a searching program 25, an application program A, an application program B, an application program C and an application program D.

The screen driving program 21 is configured to package the touching operations received on the display screen as a touching event including an operating coordinate, and then report the touching event to the application program in the application layer 622.

Other driving programs 22 may be driving programs correlated with the processer 610, driving programs correlated with the memory 620, driving programs correlated with the communication unit 630, and the like.

The operating system kernel 23 is a kernel file of the operating system.

The content capturing program 24 has the capacity of capturing the interface elements on the user interfaces of respective application programs in the application layer 622. Illustratively, each of the application programs has at least one user interface, and each user interface includes at least one interface element. Generally, n interface elements on a single user interface constitute a DOM tree having nodes each denoting an interface element. The content capturing program 24 has the capacity of capturing the interface elements on the user interfaces of respective application programs. Optionally, the content capturing program 24 further stores a coordinate range of respective interface elements in the user interface; for example, the user interface includes a text view element; and the content capturing program 24 stores a coordinate range of the text view element in the user interface.

The searching program 25 has the capacity of receiving the touching event reported by the screen driving program 21 and the capacity of communicating with the content capturing program 24. Optionally, the searching program 25 may also have the capacity of obtaining an identifier of the application program running in the foreground and the capacity of obtaining an identifier of the user interface running in the foreground. Optionally, the searching program 25 further has the capacity of communicating with the server and the capacity of displaying at least one piece of searching result information in a superposed manner on the user interface having been displayed, upon obtaining the at least one piece of searching result information from the server.

Illustratively, the application program A is a native application program provided by the operating system; while the application program B, the application program C and the application program D each are a third-party application program provided by a third-party manufacture. The application program includes, but not limited to, at least one of: News APP, navigation APP, business review APP, instant communication APP, social contact APP, blog APP and browser APP.

The screen driving program 21, the other driving programs 22, the operating system kernel 23, the content capturing program 24, the searching program 25 and the application program A may be regarded as internal portions of the operating system; while the application program B, the application program C, and the application program D may be regarded as external portions of the operating system.

The above structure of the terminal is merely described by way of example. Those skilled in the art would appreciate that the terminal may include more or less components compared to that illustrated above. For example, the terminal may further include loudspeaker, microphone, input/output (I/O) component, power supply and the like.

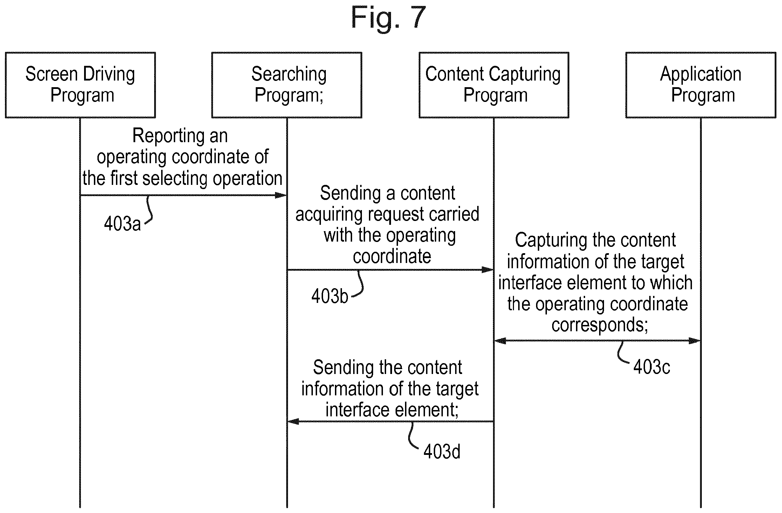

In an alternative based on the embodiment illustrated in Fig. 4, the terminal determines the target interface element according to the operating coordinate of the first selecting operation, and captures the content information of the target interface element. The step 403 in the flow chart illustrated in Fig. 4 may be replaced by following steps S403a-403d, as illustrated in Fig. 7.

In step S403a, the screen driving program reports the operating coordinate of the first selecting operation to the searching program.

Upon the user trigging the first selecting operation on the display screen, the screen driving program may generate a touching event corresponding to the selecting operation; the touching event includes the operating coordinate (x, y) of the first selecting operation.

The screen driving program reports the operating coordinate (x, y) of the first selecting operation to the searching program. For example, the screen driving program reports the touching event to the searching program.

In step S403b, the searching program sends a content acquiring request to the content capturing program, the content acquiring request is carried with the operating coordinate.

In step S403c, the content capturing program captures the content information of the target interface element to which the operating coordinate corresponds.

The content capturing program captures the content information of several interface elements of the user interface running in the foreground. Optionally, the several interface elements may be represented by a DOM tree. The content capturing program also stores a coordinate range of respective interface elements in the user interface.

The content capturing program selects the content information corresponding to the target interface from the content information of the several interface elements in the user interface, according to the operating coordinate (x, y) and the coordinate range corresponding to each of the interface elements.

In step S403d, the content capturing program sends the content information of the target interface element to the searching program.

The searching program receives the content information of the target interface element. Then the searching program sends a searching request to the server, the searching request includes the content information of the target interface element; the searching program receives at least one piece of searching result information fed back by the server, and displays the at least one piece of searching result information in a superposed manner on the user interface having been displayed.

As mentioned above, the information display method provided by embodiments of the present disclosure achieves obtaining the content information of the target interface element through a communication between the searching program and the content capturing program, so as to realize cooperation between the application layer and the kernel layer, thereby allowing the searching program located in the application layer to obtain the content information of the target interface element located in other application programs running in the foreground.

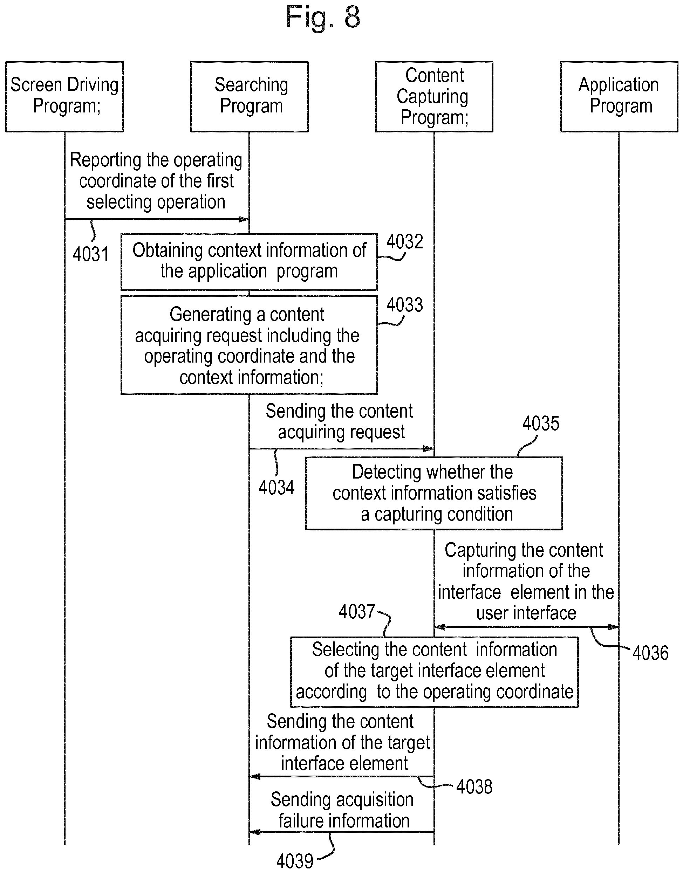

In case that the first selecting operation is a press-and-hold operation, considering the press-and-hold operation has other processing logics in certain application programs, e.g., the press-and-hold operation is used for realizing a firing logic in a shooting game, the content capturing program in some alternative embodiments is stored with a preset list. The terminal detects whether context information of the application program satisfies a capturing condition according to the preset list. The preset list is stored with context information satisfying the capturing condition and/or context information not satisfying the capturing condition. Illustratively, in an alternative based on the embodiment of Fig. 4, the step S403 in the flow chart of the embodiment illustrated in Fig.4 may be replaced by the following steps S4031-4038, as illustrated in Fig. 8.

In step S4031, the screen driving program reports the operating coordinate of the first selecting operation to the searching program.

Upon the user trigging the first selecting operation on the display screen, the screen driving program may generate a touching event corresponding to the first selecting operation; the touching event includes the operating coordinate (x, y) of the first selecting operation.

The screen driving program reports the operating coordinate (x, y) of the first selecting operation to the searching program. For example, the screen driving program reports the touching event to the searching program.

In step S4032, the searching program obtains context information of the application program.

The searching program obtains context information of the application program running in the foreground. In case that the operating system is a mobile operating system, the operating system is provided with an active stack in which an activity located at a stack top is corresponding to a user interface of the application program running in the foreground; the searching program obtains an identifier of the application program running in the foreground and an identifier of the user interface from the activity located at the stack top. The identifier of the application program may be a package name to which the APP corresponds, while the identifier of the user interface may be a class name to which the user interface corresponds.

The context information includes the identifier of the application program and/or the identifier of the user interface. The application program is an application program running in the foreground, and the user interface is a user interface running in the foreground.

In step S4033, the searching program generates a content acquiring request including the operating coordinate and the context information.

In step S4034, the searching program sends the content acquiring request to the content capturing program, the content acquiring request is carried with the operating coordinate and the context information.

In step S4035, the content capturing program detects whether the context information satisfies a capturing condition according to a preset list.

The preset list includes a preset white list and/or a preset black list.

The above-mentioned capturing condition indicates that the application program where the context information locates belongs to the preset white list, or doesn't belong to the preset black list.

In case that the capturing condition indicates the application program where the context information locates belongs to the preset white list, if the context information satisfies the capturing condition, i.e., the application program where the context information locates belongs to the preset white list, then entering step S4036.

If the context information doesn't satisfy the capturing condition, i.e., the application program where the context information locates doesn't belong to the preset white list, then entering step S4039.

In step S4036, if the context information belongs to the preset white list, then capturing the content information of the interface element in the user interface.

The content capturing program captures the content information of several interface elements of the user interface running in the foreground. Optionally, the several interface elements may be represented by a DOM tree. The content capturing program also stores a coordinate range corresponding to each of the interface elements.

In step S4037, the content capturing program selects the content information of the target interface element according to the operating coordinate.

The content capturing program selects the content information corresponding to the target interface from the content information of the several interface elements in the user interface, according to the operating coordinate (x, y) and the coordinate range corresponding to each of the interface elements.

In step S4038, the content capturing program sends the content information of the target interface element to the searching program.

The searching program receives the content information of the target interface element. Then the searching program sends the searching request to the server, and the searching request includes the content information of the target interface element; the searching program receives at least one piece of searching result information which is fed back by the server, and displays the at least one piece of searching result information in a superposed manner on the user interface having been displayed.

In step S4039, the content capturing program sends acquisition failure information to the searching program.

Herein, the searching program doesn't need to send the searching request to the server.

In these optional embodiments, if an interface element in a user interface of an application program is not available for the content capturing program, then the identifier of the application program may be excluded from the preset white list or may be added to the preset black list; if a certain user interface x of an application program is not available for the content capturing program, then the identifier of the user interface x may be excluded from the preset white list or may be added to the preset black list; if a user interface x of an application program is not suitable to be captured by the content capturing program, e.g., the application is a game APP, then the identifier of the game APP may be excluded from the preset white list or may be added to the preset black list.

In the above-mentioned embodiments, the capturing condition of the content capturing program is described with reference to the preset white list by way of example; while in another optional embodiment, the content capturing program is stored with a preset black list including an identifier of a black list APP and/or an identifier of a blacklist user interface. In these optional embodiments, if an interface element in a user interface of an application program is not available for the content capturing program, then the identifier of the application program may be added into the preset black list; if a certain user interface x of an application program is not available for the content capturing program, then the identifier of the user interface x may be added into the preset black list; if a user interface x of an application program is not suitable to be captured by the content capturing program, e.g., the application is a game APP, then the identifier of the game APP may be added to the preset black list.

As mentioned above, the information display method provided by the embodiments of the present disclosure stores a preset list in the content capturing program; in this way, it doesn't need to obtain the target interface element of the application program and the user interface which do not satisfy the capturing condition, thereby preventing from performing unnecessary acquisition tasks and avoiding any confliction with other executed logics corresponding to the first selecting operation.

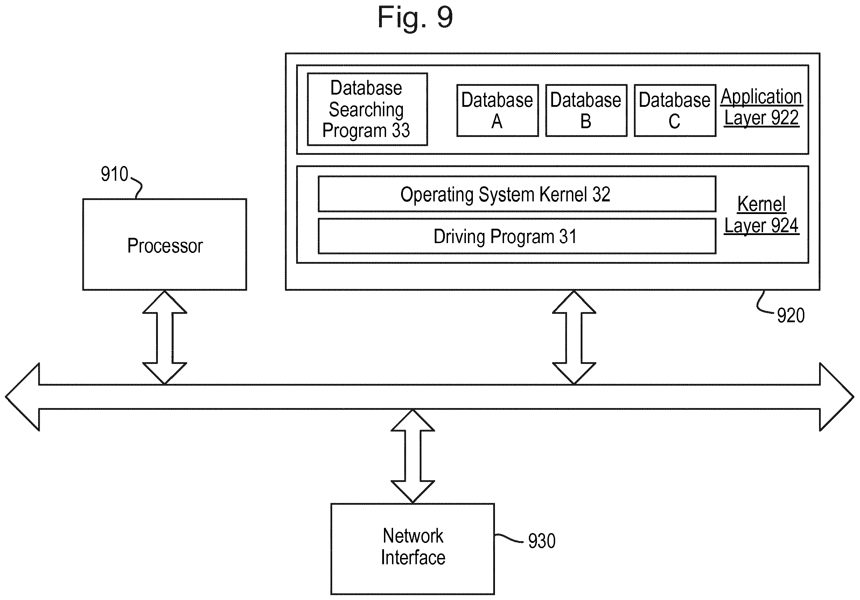

Fig. 9 is a schematically structural view illustrating a server provided by an aspect of the present disclosure. The server includes a processer 910, a memory 920 and a network interface 930.

The processer 910 includes one or more processing kernel.

The memory 920 is configured to store program instructions and/or data; the processer 910 is configured to execute the program instructions in the memory 920 so as to realize various functional applications and data processes. Optionally, the program instructions stored in the memory 920 are configured to implement the steps of the information display method provided by embodiments of the present disclosure which are performed by the server. The memory 920 may include high-speed random access memory (RAM), and may also include nonvolatile memory; for example, at least one disk storage, flash memory device or other volatile solid-state memories.

The network interface 930 is configured to realize a communication with the terminal or other servers. The network interface 930 may be a wired communication unit such as Fiber interface, and RJ45 network card and interface. The network interface 930 may also be a wireless communication unit.

Optionally, the program instructions stored in the memory 920 include an application layer 922 and a kernel layer 924. The application layer 922 includes at least one application program. Illustratively, the application layer 922 includes a database searching program 33, a database A, a database B and a database C.

The database searching program 33 has the capacity of extracting a searching keyword from the target interface element and the capacity of retrieving the searching result information according to the searching keyword.

More than one database may be configured to store congruent relationships between the searching keyword and the searching result information. The searching result information may be varied depending on the database. Illustratively, the database A is configured to provide congruent relationships between person name and person introduction information; the database B is configured to provide congruent relationships between shop name and shop information; and database C is configured to provide congruent relationships between commodity and commodity information.

Optionally, the application layer 922 may further stores at least one of a decomposing program configured to decompose a text into several words; a word formation recognizing program; a OCR program configured to perform OCR; and an image recognition program configured to perform image recognition. These programs may be integrated in the database searching program 33 as a part thereof. When the content information of the target interface element obtained by the database searching program 33 is in a form of text, the decomposing program may decompose the content information into several candidate items each being a word, and the word formation recognizing program is configured to recognize a word format of each of the candidate items. When the content information of the target interface element obtained by the database searching program 33 is image data, the OCR program is configured to recognize the characters in the image, and instead use the characters in the image as the content information of the target interface element; or the image recognition program is configured to recognize an article name, an article category or an article attribution from the image, and instead use the article name, the article category or the article attribution as the content information of the target interface element. These recognition results may provide the user with the candidate item used as the searching keyword.

The above structure of the server is merely described by way of example. Those skilled in the art would appreciate that the server may include more or less components compared to that illustrated above. For example, the server may further include loudspeaker, microphone, input/output (I/O) component, power supply and the like.

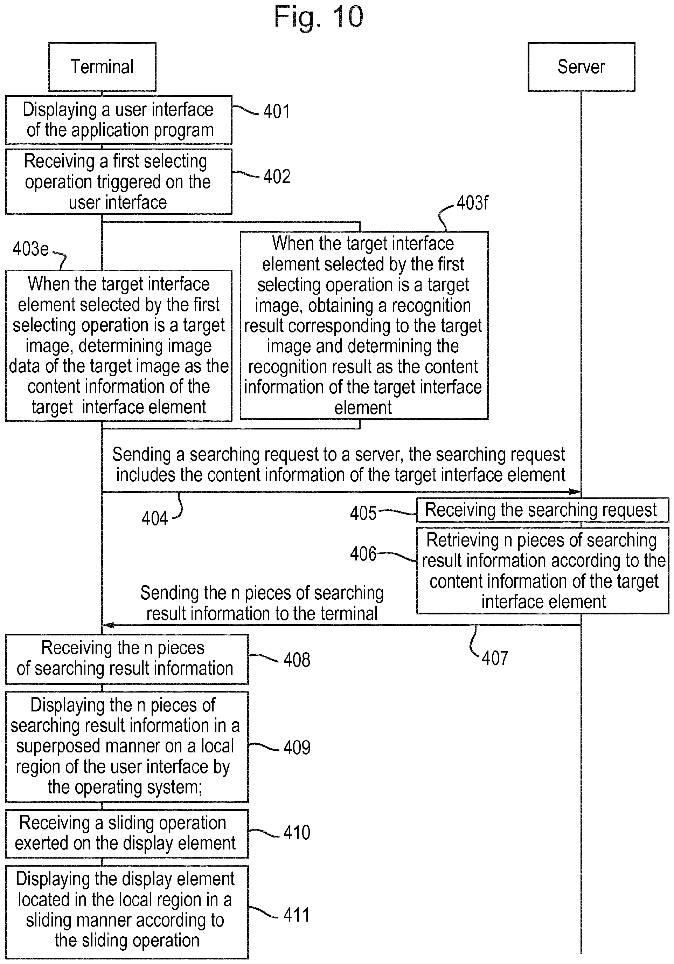

In the embodiments illustrated in Fig. 7 or Fig. 8, the content information of the target interface element is described as a text directly captured by the content capturing program by way of example. In some embodiments, the target interface element may also be an image selected by the first selecting operation. Herein, the step S403 in the embodiment illustrated in Fig. 4 may be replaced by the following step S403e or step S403f, as illustrated in Fig. 10.

In step S403e, when the target interface element selected by the first selecting operation is a target image, determining image data of the target image as the content information of the target interface element.

Under such implementation, the server may perform OCR or image recognition to the image data of the target image, and perform searching according to the recognition result, to obtain at least one piece of searching result information.

In step S403f, when the target interface element selected by the first selecting operation is a target image, obtaining a recognition result corresponding to the target image and determining the recognition result as the content information of the target interface element.

Under such implementation, the terminal may perform OCR to the image data of the target image, and determine the recognized characters as the content information of the target interface element; and/or, the terminal may perform image recognition to the target image, and determine the recognized article name and/or article attribution as the content information of the target interface element. The server may perform searching according to the recognition result of the terminal, to obtain at least one piece of searching result information.

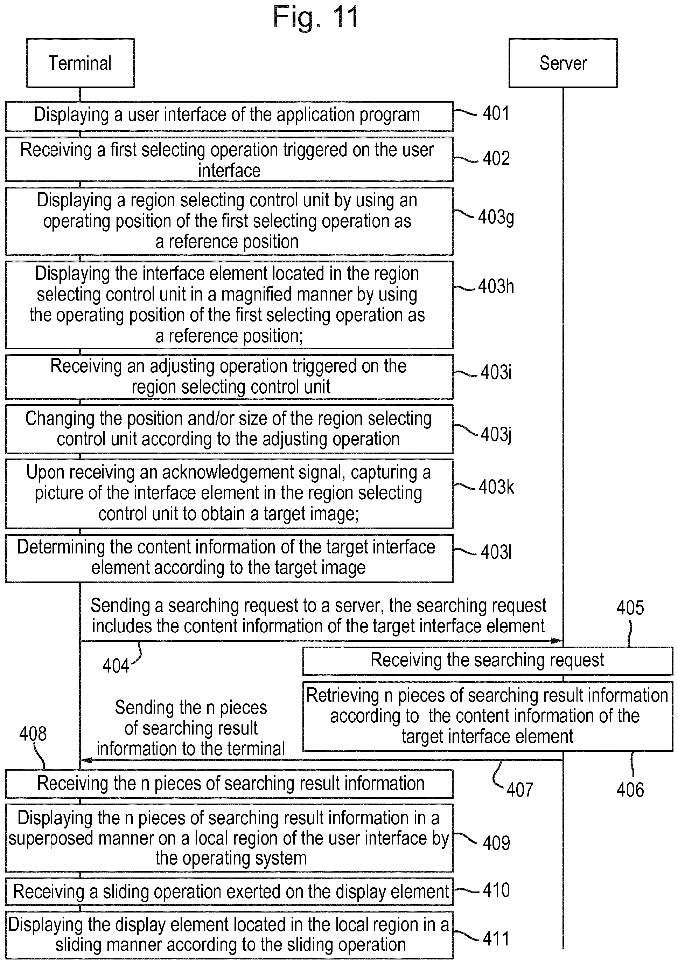

In the embodiment as illustrated in Fig.10, the content information of the target interface element is described as an image directly captured by the content capturing program by way of example. In some embodiments, the content information of the target interface element may also be a text obtained by capturing a picture of the user interface and analyzing according to the picture as captured. Herein, the step S403 in the embodiment of Fig. 4 may be replaced by the following steps S403g-S4031, as illustrated in Fig. 11.

In step S403g, displaying a region selecting control unit by using an operating position of the first selecting operation as a reference position.

The region selecting control unit may be any one of a rectangular-shaped region selecting control unit, a circle-shaped region selecting control unit and an irregular-shaped region selecting control unit.

In case that the first selecting operation is a force-touch operation by way of example, upon the user pressing a touch screen heavily, the operating system of the terminal displays the region selecting control unit by using the position at which the user presses heavily as the reference position (or a central point).

The region selecting control unit may be displayed above the target interface element in a superposed manner.

In step S403h, displaying the interface element located in the region selecting control unit in a magnified manner by using the operating position of the first selecting operation as a reference position.

Considering the reading convenience of user, the operating system of the terminal displays the interface element located in the region selecting control unit in a magnified manner by using the operating position of the first selecting operation as the reference position. The magnification time may be any preset number.

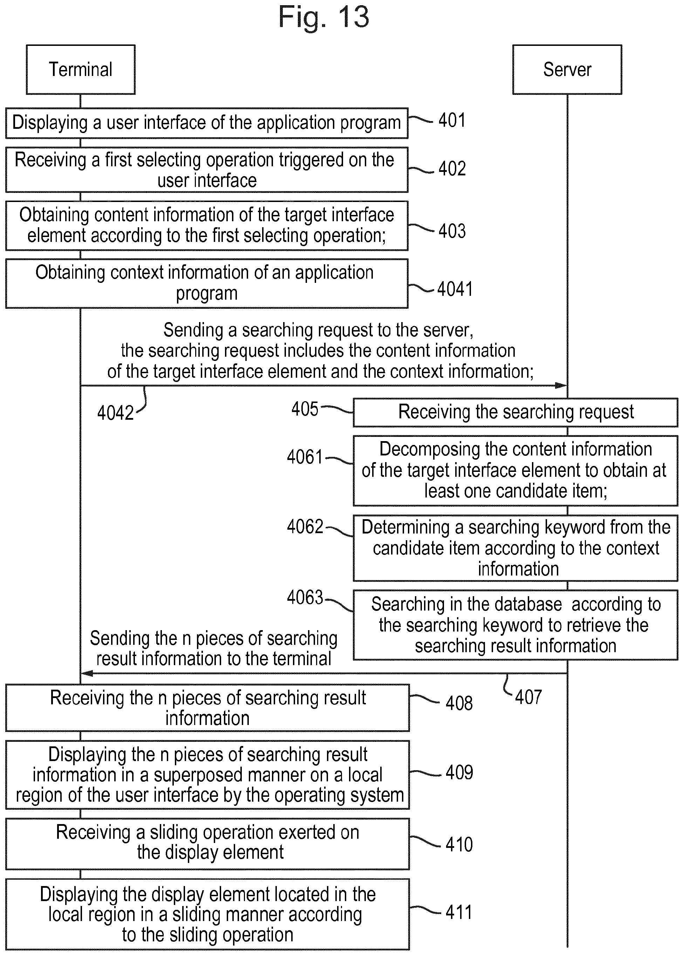

With reference to Fig. 13, an interface element 132 is displayed on a user interface 131, and a user may perform a force-touch operation (a press-and-hold operation is also possible) to the interface element 132 if he/she is interested in the interface element 132. The operating system pops out a rectangular-shaped region selecting control unit 30 with the pressed point as the central point. At the same time, the interface element in the rectangular-shaped region selecting control unit 30 is also displayed with 1.5 times of magnification.

In step s403i, receiving an adjusting operation triggered on the region selecting control unit.

If a position and/or size of the region selecting control unit cannot satisfy the user's expectation, then the user may adjust the position and/or size of the region selecting control unit.

In case that the region selecting control unit is a rectangular-shaped region selecting control unit, by way of example, when the user triggers a dragging operation inside the rectangular-shaped region selecting control unit, the dragging operation indicates an adjusting operation for adjusting the position; when the user triggers a dragging operation at an edge of the rectangular-shaped region selecting control unit, the dragging operation indicates an adjusting operation for adjusting the size.

In step S403j, changing the position and/or size of the region selecting control unit according to the adjusting operation.

When receiving the adjusting operation for adjusting the position, the operating system of the terminal changes the position of the region selecting control unit according to the adjusting operation. For example, as it can be seen from Fig. 13, the user may drag the rectangular-shaped region selecting control unit to locate the interface element 132 at a center of the rectangular-shaped region selecting control unit 30.

When receiving the adjusting operation for adjusting the size, the operating system of the terminal changes the size of the region selecting control unit according to the adjusting operation.

In step S403k, upon receiving an acknowledgement signal, capturing a picture of the interface element in the region selecting control unit to obtain a target image.

The acknowledgement signal may be a signal manually triggered by a user, or may be a signal automatically generated when the region selecting control unit fails to receive any external operation within a preset time interval.

Upon receiving the acknowledgement signal, the operating system of the terminal captures a picture of the interface element in the region selecting control unit and uses the image as captured as the target image.

In step S4031, determining the content information of the target interface element according to the target image.

The present step may be implemented as any of the following three different solutions.

As a first solution, the terminal determines image data of the target image as the content information of the target interface element.

The terminal sends a searching request to the server, the searching request includes the image data of the target image.

Optionally, the server performs an OCR to the image data to obtain a text in the image data; decomposes the text into words to obtain several candidate items; determines a searching keyword from the several candidate items; retrieves n pieces of searching result information according to the searching keyword; and sends the n pieces of searching result information to the terminal. Additionally or alternatively, the server performs an image recognition to the image data; recognizes at least one type of information of an article name, an article category or an article attribution from the image data for use as at least one candidate item; determines a searching keyword from the at least one candidate item; retrieves n pieces of searching result information according to the searching keyword; and sends the n pieces of searching result information to the terminal.

As a second solution, the terminal performs OCR and/or image recognition to the image data of the target image, and uses the recognition result as the content information of the target interface element.

Optionally, the terminal performs OCR to the image data to obtain a text in the image data, and uses the text recognized by the OCR as the content information; and/or, the terminal performs image recognition to the image data to recognize at least one type of information of an article name, an article category and an article attribution from the image data for use as the content information.

The terminal sends a searching request to the server; the searching request includes the recognition result obtained by performing OCR or image recognition to the image data. The server decomposes the recognition result into words to obtain at least one candidate item; determines a searching keyword from the candidate item; retrieves n pieces of searching result information according to the searching keyword; and sends the n pieces of searching result information to the terminal.

As a third solution, the terminal sends the image data of the target image to the image processing server which performs OCR and/or image recognition to the image data of the target image; then the terminal receives a recognition result from the image processing server and determines the recognition result as the content information of the target interface element.

The terminal sends a searching request to the server; the searching request includes the recognition result obtained by performing OCR and/or image recognition to the image data. The server decomposes the recognition result into words to obtain at least one candidate item; determines a searching keyword from the at least one candidate item; retrieves n pieces of searching result information according to the searching keyword; and sends the n pieces of searching result information to the terminal.

Consequently, the terminal receives the n pieces of searching result information and displays the n pieces of searching result information in a superposed manner on the local region of the user interface through the operating system.

As mentioned above, the information display method provided by the present embodiment obtains the content information by means of capturing pictures, so that various types of interface elements such as pictures, mixture of texts and pictures, videos and gifs may be quickly searched and processed, which improves the searching efficiency of a user when operating a terminal and simplifies the searching operation of the user.

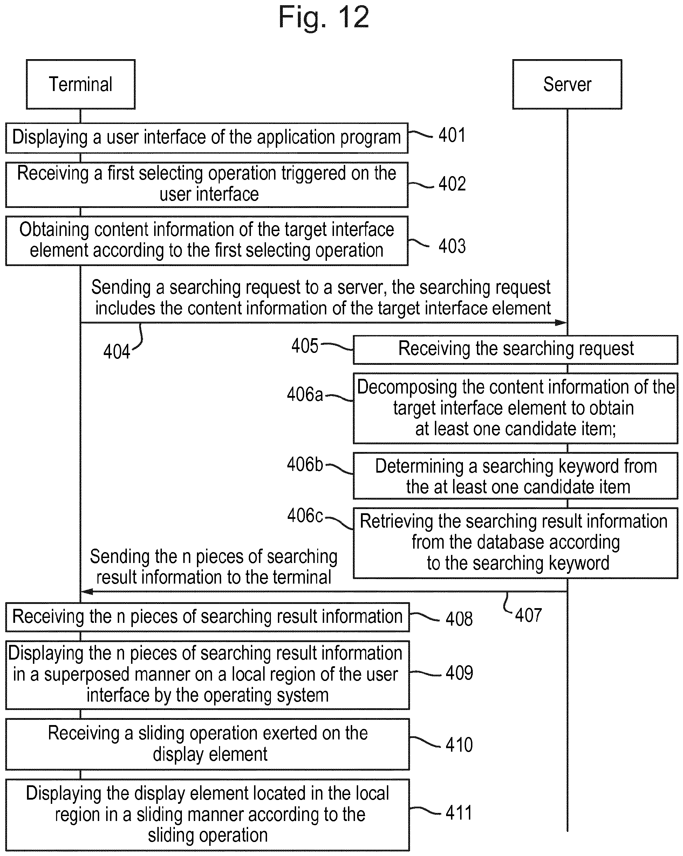

In an alternative example, the step S406 may be replaced by the following steps S406a-S406c, as illustrated in Fig. 12.

In step S406a, decomposing the content information of the target interface element to obtain at least one candidate item.

In case that the content information of the target interface element is a text, considering a word is the smallest language element having independent meaning, the database searching program in the database decomposes the content information into words to obtain at least one candidate item.

Optionally, the server may also recognize a word format and/or an attribution of every candidate item. The word format includes at least one of verb, noun, adjective, pronoun, predicate, numeral, classifier, interjection and mimetic word. The attribution includes person name, site name, merchant name, commodity name, website link, URL with predetermined format, and the like.

For example, if the content information of the target interface element is "The Huaxia art gallery will hold an art exhibition on Day 19^{th}", then the server decomposes the content information into five candidate items, which are "The Huaxia art gallery", "will", "hold", "an art exhibition" and "on Day 19^{th}", respectively.

In case that the content information of the target interface element is image data, the server performs OCR to the content information of the image data to obtain a text in the image data, and decomposes the text into words to obtain at least one candidate item; or, the server performs image recognition to the image data to recognize at least one type of information of an article name, an article category and an article attribution from the image data for use as the at least one candidate item.

In step S406b, determining a searching keyword from the at least one candidate item.

Optionally, the database searching program determines at least one of the person name, site name, merchant name, commodity name, website link and URL with predetermined format as the searching keyword.

In step S406c, retrieving the searching result information from the database according to the searching keyword. ,

The database searching program inputs the searching keyword into the database, and retrieves the searching result information corresponding to the searching keyword.

Optionally, the database searching program inputs the searching keyword into several databases, and retrieves n types of searching result information corresponding to the searching keyword.

As mentioned above, the information display method provided by the present embodiment decomposes the content information through the server to obtain at least one candidate item; determines a searching keyword from the candidate item; and retrieves the searching result information by searching using the searching keyword. In this way, the meaning of the content information may be accurately understood so as to retrieve the searching result information expected by the user.

Alternatively, the step S404 in Fig. 4 may be replaced by the following steps S4041 and S4042; and the step S406 may be replaced by the following steps S4061- S4063, as illustrated in Fig. 13.

In step S4041, the terminal obtains context information of an application program.

The searching program in the terminal obtains context information of the application program running in the foreground. In case that the operating system is a mobile operating system, by way of example, the operating system is provided with an active stack in which an activity located at a stack top is corresponding to a user interface of the application program running in the foreground; and the searching program obtains an identifier of the application program and an identifier of the user interface running in the foreground from the activity located at the stack top. The identifier of the application program may be a package name to which the APP corresponds, while the identifier of the user interface may be a class name to which the user interface corresponds.

Optionally, the context information includes an identifier of an application program and/or an identifier of a user interface. The application program is an application program running in the foreground, and the user interface is a user interface running in the foreground. In other embodiments, the context information may also include other information such as an identifier of a user interface recently browsed and an identifier of a third-party application program having been installed, without limiting the embodiments thereto.

It should be explained that, if the terminal has obtained the context information in step S403, then the step S4041 may be omitted.

In step S4042, the terminal sends a searching request to the server, and the searching request includes the content information of the target interface element and the context information.

The searching program in the terminal sends the searching request to the server, and the searching request includes the content information and the context information of the target interface element.

In step S405, the server receives the searching request.

In step S4061, the server decomposes the content information of the target interface element to obtain at least one candidate item.

In case that the content information of the target interface element is a text, considering a word is the smallest language element having independent meaning, the database searching program in the database decomposes the content information into words to obtain at least one candidate item.

Optionally, the server may also recognize a word format and/or an attribution of every candidate item. The word format includes at least one of verb, noun, adjective, pronoun, predicate, numeral, classifier, interjection and mimetic word. The attribution includes person name, site name, merchant name, commodity name, website link, URL with predetermined format, and the like.

For example, if the content information of the target interface element is "The Huaxia art gallery will hold an art exhibition on Day 19^{th}", then the server decomposes the content information into five candidate items, which are "The Huaxia art gallery", "will", "hold", "an art exhibition" and "on Day 19^{th}", respectively.

In case that the content information of the target interface element is image data, the server performs OCR to the content information of the image data to obtain a text in the image data, and decomposes the text into words to obtain at least one candidate item; or, the server performs image recognition to the image data to recognize at least one type of information of an article name, an article category and an article attribution from the image data for use as the at least one candidate item.

In step S4062, determining a searching keyword from the at least one candidate item according to the context information.

Optionally, the database searching program stores selection strategies corresponding to the context information. The database searching program determines a corresponding selection strategy according to the context information, and determines the searching keyword from the at least one candidate item according to the selection strategy.

Illustratively, if the context information indicates that the application program running in the foreground is a news APP, then the selection strategy is to use all the nouns as the searching keyword.

If the context information indicates that the application program running in the foreground is a user data page, then the selection strategy is to use the person name and the site name as the searching keyword.

If the context information indicates that the application program running in the foreground is a map APP, then the selection strategy is to use the site name as the searching keyword.

If the context information indicates that the application program running in the foreground is a shopping APP, then the selection strategy is to use the merchant name, the commodity name, the website link and/or the URL with predetermined format as the searching keyword.

If the context information indicates that the application program running in the foreground is a movie APP, then the selection strategy is to use a movie name, a cinema name and/or actor/actress name as the searching keyword.

The selection strategies above are merely described by way of example, without limiting the embodiments of the present disclosure thereto.

In step S4063, searching in the database according to the searching keyword to retrieve the searching result information.

The database searching program inputs the searching keyword into the database, and retrieves the searching result information corresponding to the searching keyword.

Optionally, the database searching program inputs the searching keyword into several databases, and retrieves n pieces of searching result information corresponding to the searching keyword.

Optionally, the database searching program selects a target database according to the context information, and inputs the searching keyword into the target database to obtain n pieces of searching result information corresponding to the searching keyword.

As mentioned above, in the information display method provided by the present embodiment, the searching request is carried with context information, so that the server may select more suitable or more exact searching keyword from the at least one candidate item according to the context information, and retrieves more accurate searching result information according to the searching keyword; thereby retrieving the searching result information which meet the user's expectation in a better way by combining with the current usage scenario of the user, based on true understanding of the meaning of the content information.

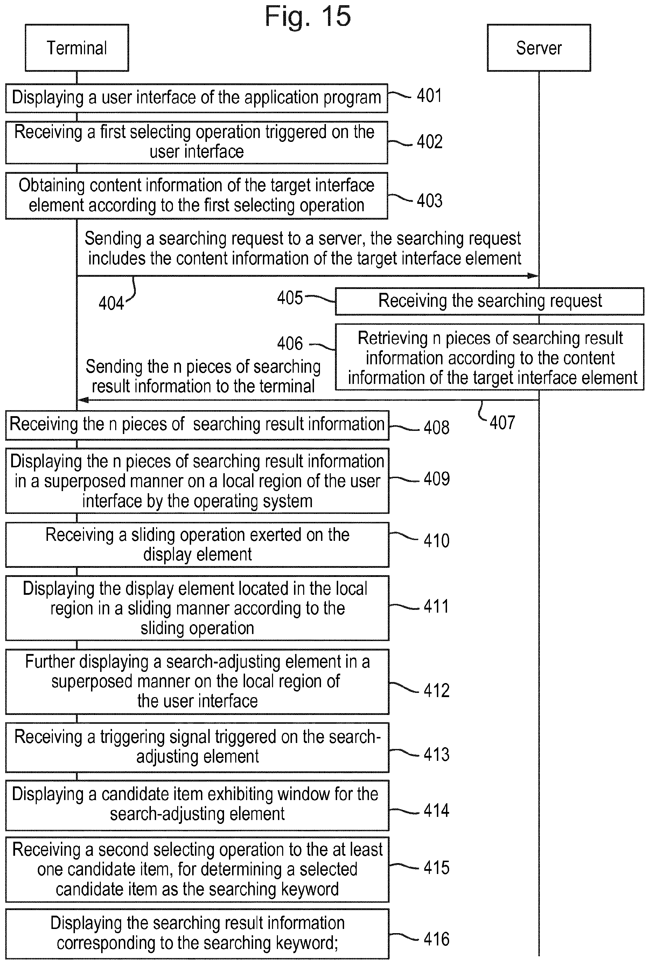

In an alternative of the example in Fig. 4, it may provide a searching keyword adjusting mechanism to the user. In more details, the above-mentioned information display method further includes steps S412-S416, as illustrated in Fig. 15.

In step S412, displaying a search-adjusting element in a superposed manner on the local region of the user interface.

When displaying the n pieces of searching result information on the local region, the terminal may also display the search-adjusting element on the local region of the user interface. For a local region adopting a list-view display mode, the search-adjusting element is displayed as one of the list items.

Optionally, when the search-adjusting element is fixedly displayed at a certain position (c.g., the rightmost side) on the local region, the step S412 and the step S409 will be performed at the same time. Optionally, the search-adjusting element is displayed on the local region as the last display element; when it's turn to slide the n^{th} display element according to the sliding operation, the search-adjusting element may be sliding into the local region for display.

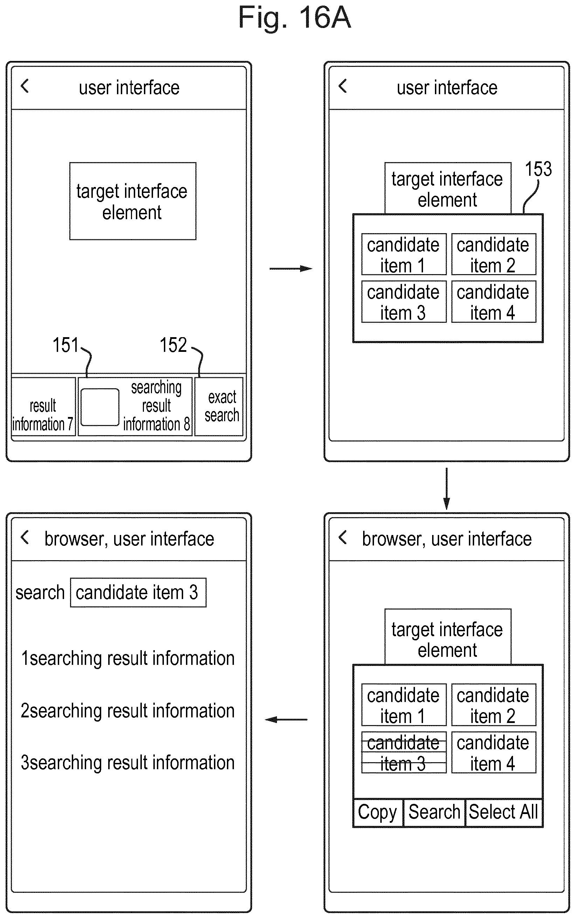

For example, referring to Fig. 16A, eight display elements are arranged for displaying the searching result information; when it is turn to slide the 8^{th} display element 151 according to the sliding operation, the terminal will display the search-adjusting element, that is, a button 152 of "exact search", on the left side of thc8^{th} display element 151.

In step s413, receiving a triggering signal triggered on the search-adjusting element.

Optionally, the triggering signal is a click-on signal exerted on the search-adjusting element.

In step S414, displaying a candidate item exhibiting window for the search-adjusting element, the candidate item exhibiting window includes m candidate items corresponding to the target interface element.

Optionally, the candidate item exhibiting window is another superposed window which occupies a central region of the entire display region. On the candidate item exhibiting window, m candidate items are displayed, wherein m is a positive integer.

When displaying the candidate item exhibiting window, the n display elements and the search-adjusting element superposed on the local region may be stayed at the original position, and may also be withdrawn from display.

For example, referring to Fig. 16A, upon the user clicking on the button 152 of "exact search", the operating system in the terminal withdraws the display of the n display elements and the button 152 of "exact search", and displays the candidate item exhibiting window 153 in a superposed manner on the central region of the display screen. On the candidate item exhibiting window 153, four candidate items are displayed.

Optionally, on the candidate item exhibiting window 153, a button of "copy", a button of "search" and a button of "select all" may be further displayed.

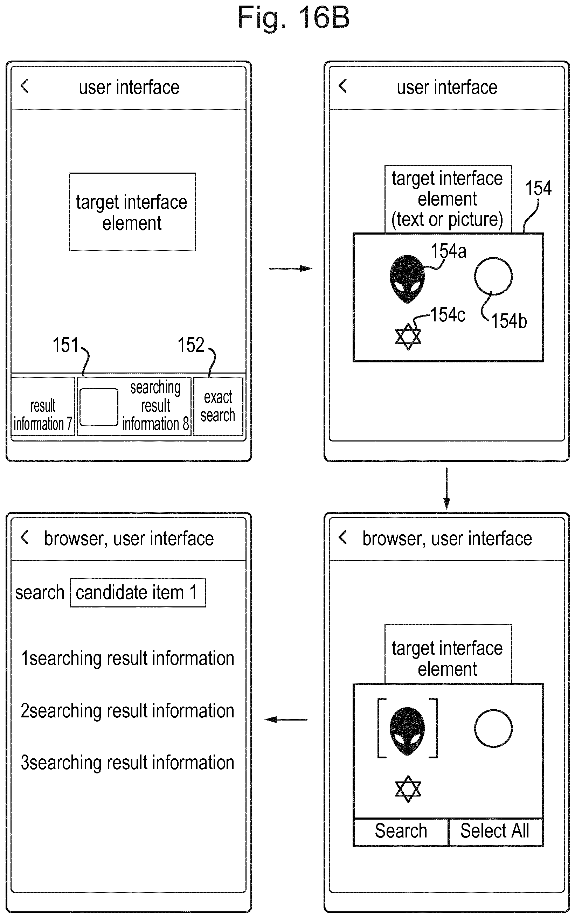

In another example, referring to Fig. 16B, upon the user clicking on the button 152 of "exact search," the operating system in the terminal withdraws the display of the n display elements and the button 152 of "exact search", and displays a candidate item exhibiting window 154 for picture in a superposed manner on the central region of the display screen. On the candidate item exhibiting window 154, three candidate items 154a, 154b and 154c are displayed.

Optionally, on the candidate item exhibiting window 154, a button of "search" and a button of "select all" may be further displayed.

In step S415, receiving a second selecting operation to the at least one candidate item. The second selecting operation is used for determining a keyword, to which a selected candidate item corresponds, as the searching keyword.

The user may click on an interested candidate item on the candidate item exhibiting window, and then determines at least one candidate item as the searching keyword.

For example, referring to Fig. 16A, the user selects "candidate item 3" as the searching keyword.

In Fig. 16B, the user selects a picture candidate 154a as the searching keyword.

In step S416, displaying the searching result information corresponding to the searching keyword.

Optionally, the terminal sends the above-mentioned searching keyword to the server, which feeds back n pieces of searching result information corresponding to the searching keyword to the terminal.

Optionally, the terminal invokes a browser, utilizes a searching engine in the browser to retrieve the searching result information matched with the searching keyword, and displays the searching result information matched with the searching keyword in the browser.

The browser invoked by the terminal may be a browser built in the operating system, and may also be a default browser defined by the user.

As mentioned above, in the information display method provided by the present embodiment, when n pieces of searching result information obtained by an initial searching is relatively less or relatively more, the user may perform a second searching by manually selecting a searching keyword through the search-adjusting element and the candidate item exhibiting window provided to the user, thereby increasing the searching accuracy, and reducing the operation times of re-opening the browser and inputting the searching keyword.

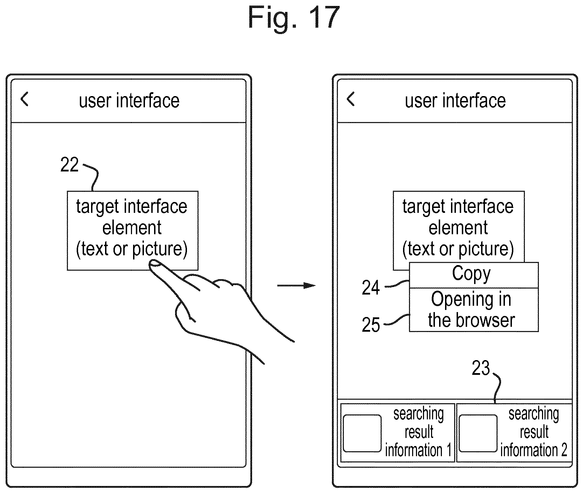

It should be explained herein that, the foregoing embodiments may be combined flexibly for implementation by those skilled in the art; moreover, the foregoing embodiments may also be flexibly combined with the existing embodiments in the related art by those skilled in the art. For example, in related art, usually, the press-and-hold operation may be used for triggering operations such as copying, pasting and searching. In case that the foregoing embodiments are combined with existing embodiments in the related art, as illustrated in Fig. 17, if the user presses and holds on the target interface element 22, then the terminal will not only display at least one piece of searching result information on the local region 23 but also display a control unit 24 of "copy" and a button 25 of "opening in the browser" on the central region of the display screen.

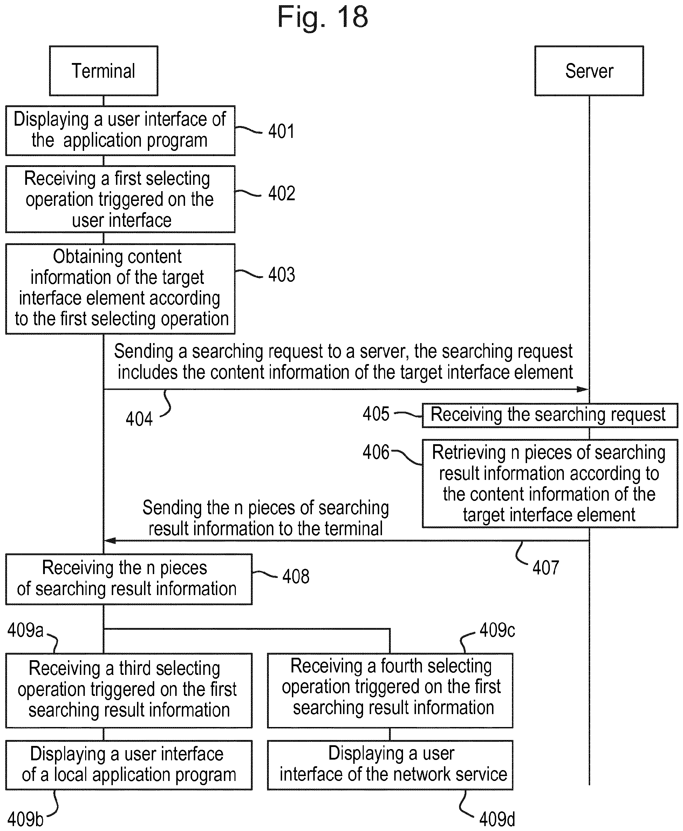

In an alternative of the example illustrated in Fig. 4, the n pieces of searching result information include at least one piece of first searching result information which includes an invoking interface for invoking a local application program; the invoking interface has an input parameter including a searching keyword corresponding to the target interface element. Steps S409-S411 may be replaced by the following steps S409a-S409b, or steps S409c-S409d, as illustrated in Fig. 18.

In step S409a, receiving a third selecting operation triggered on the first searching result information.

The third selecting operation is used for selecting a target first searching result information which includes an invoking interface of the local application program. The local application program is an available APP having been installed on the terminal, and the invoking interface is a function instruction for invoking the local application program or a URL address for invoking a webpage corresponding to the local application program.

In step S409b, displaying a user interface of the local application program.

Receiving the invoking interface of local application program on the first searching result information according to third selecting operation as triggered, so as to invoke a user interface of the local application program. The user interface includes processing results obtained through processing the searching keyword corresponding to the first searching result information by the local application program.

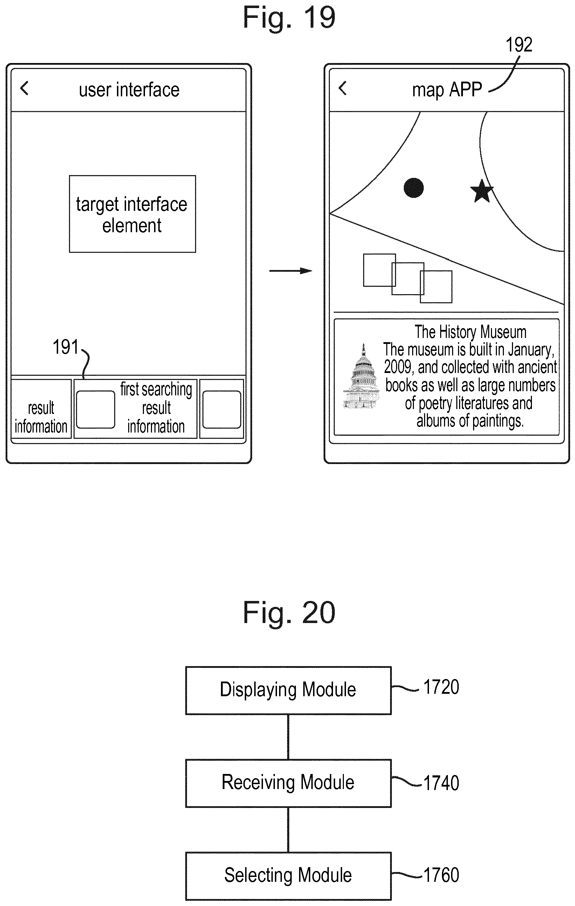

In an example, referring to Fig. 19, upon the user triggering the third selecting operation on the first searching result information 191, receiving the invoking interface of local application program in the first searching result information 191. For example, if the first searching result information contains a site name, then it contains an invoking interface of a local map APP; the invoking interface may be a function invoking instruction of the map APP or a URL address of a webpage to which the map APP corresponds; upon triggering the third selecting operation, receiving the function instruction for invoking the map APP and displaying a map user interface 192. The map user interface 192 as displayed includes processing results obtained by processing the searching keyword corresponding to the first searching result information 191 by the map APP. For example, if the searching keyword corresponding to the first searching result information 191 is "museum", then a content displayed in the map user interface 192 includes a searching result interface obtained by searching in the map APP with "museum" as the searching keyword.

The steps S409a-S409b in the above embodiment may be replaced by steps S409c-S409d. The steps S409a-S409b and the steps S409c-S409d may be two embodiments independently from each other. The steps S409a-S409b may be alternately performed with the steps S409c-S409d, and may also be combined with any one or more of the foregoing embodiments.

In an alternative of the example illustrated in Fig. 4, the n pieces of searching result information include at least one piece of second searching result information which includes an invoking interface for invoking a network service. The invoking interface has an input parameter including a searching keyword corresponding to the target interface element.

In step S409c, receiving a fourth selecting operation triggered on the first searching result information.

The fourth selecting operation is used for selecting a target first searching result information. A content of the first searching result information includes an invoking interface of network service. The network service refers to an application program having not been installed in the terminal but available in a webpage, or other programs such as a searching engine; the invoking interface is a URL address for invoking a webpage corresponding to the network service.

In step S409d, displaying a user interface of the network service.

Receiving the invoking interface of network service on the first searching result information according to the fourth selecting operation as triggered, so as to invoke a user interface corresponding to the webpage of the network service. The user interface includes processing results obtained through processing the searching keyword corresponding to the first searching result information by a network application program.

In one or more embodiments, upon the user triggering the fourth selecting operation on the first searching result information, receiving an invoking interface of network APP in the first searching result information. For example, if the first searching result information contains a title of book, then it contains a URL address of the network APP. Upon triggering the fourth selecting operation, receiving a function instruction for invoking a browser APP and displaying a user interface. The user interface includes processing results obtained by processing the searching keyword corresponding to the first searching result information through a browser searching engine. For example, if the searching keyword corresponding to the first searching result information is "dictionary", then the content displayed in the browser user interface includes a searching result interface obtained by searching in the searching engine with "dictionary" as the searching keyword.

Fig. 20 is a block diagram illustrating an information display device provided by an aspect of the present disclosure. The information display device may be implemented with software, hardware and/or combination thereof to constitute an entire terminal or a portion of the terminal. The device is installed with an operating system and an application program.

The device includes a displaying module 1720 configured to display a user interface of the application program, the user interface includes at least one interface element; a receiving module 1740 configured to receive a first selecting operation triggered on the user interface; a selecting module 1760 configured to select a target interface element from the at least one interface element according to the first selecting operation; and the displaying module 1720 is configured to display searching result information in a superposed manner on a local region of the user interface by the operating system, the searching result information is corresponding to the target interface element.

In one or more embodiments, the displaying module 1720 is configured to display n display elements in a superposed manner on a local region of the user interface by the operating system, wherein n is a positive integer; a display level of the display element is higher than a display level of the user interface, and each of the display elements is configured to display a first order information of at least one piece of searching result information thereon.

In one or more embodiments, the displaying module 1720 is configured to display a list-view control unit in a superposed manner on a local region of the user interface by the operating system; the list-view control unit includes n display elements, wherein n≥2; the n display elements are arranged sequentially along a first direction in the list-view control unit, and a tail of an i^{th} display element is connected to a header of an (i+1)^{th} display element, wherein i is a positive integer and i≤n-1.

In one or more embodiments, the local region is: a bottom region of the user interface; or an adjacent region of the target interface element; or an adjacent region of an operating position of the selecting operation.

In one or more embodiments, the receiving module is further configured to receive a first sliding operation on a j^{th} searching result information, the first sliding operation is an operation of sliding along a first direction. When the receiving module receives a first sliding operation on a j^{th} searching result information, the displaying module is configured to display the j^{th} searching result information in a sliding manner along the first direction by following the first sliding operation, to hide a portion of the j^{th} searching result information which is sliding off the local region and display a portion of a (j-1)^{th} searching result information which is sliding into the local region, where j is an integer greater than 1, and j is smaller than or equal to n.

Additionally or alternatively, the receiving module is further configured to receive a second sliding operation on a k^{th} searching result information, the second sliding operation is an operation of sliding along a second direction. When the receiving module receives a second sliding operation on a k^{th} searching result information, the displaying module is configured to display the k^{th} searching result information in a sliding manner along the second direction by following the second sliding operation, to hide a portion of the k^{th} searching result information which is sliding off the local region and display a portion of a (k+1)^{th} searching result information which is sliding into the local region, wherein k is an integer smaller than or equal to n. The first direction is opposite to the second direction.

In one embodiment according to the invention, the device further includes: an obtaining module configured to obtain content information of the target interface element according to the first selecting operation; a sending module configured to send a searching request to a server, the searching request includes the content information of the target interface element; and the receiving module is further configured to receive the searching result information which is fed back by the server.

In one embodiment according to the invention, the obtaining module is configured to determine the target interface element according to an operating coordinate of the first selecting operation, and capture the content information of the target interface element.

In one embodiment according to the invention, the obtaining module is configured to detect whether context information of the application program satisfies a capturing condition according to a preset list, the preset list is stored with context information satisfying the capturing condition and/or context information not satisfying the capturing condition; and if the context information satisfies the capturing condition, then performing a step of determining the target interface element according to the operating coordinate of the first selecting operation and capturing the content information of the target interface element.

In one or more embodiments, the obtaining module includes: a screen driving program sub-module, a searching program sub-module, and a content capturing program sub-module. The screen driving program sub-module is configured to report an operating coordinate of the first selecting operation to the searching program; the searching program sub-module is configured to send an interface element acquiring request to the content capturing program, the interface element acquiring request is carried with the operating coordinate; the content capturing program sub-module is configured to capture content information of the target interface element to which the operating coordinate corresponds; and the content capturing program sub-module is configured to send the content information of the target interface element to the searching program by the content capturing program.

In one or more embodiments, the obtaining module includes: a searching program sub-module and a content capturing program sub-module. The searching program sub-module is configured to obtain context information of the application program which includes an identifier of the application program and/or an identifier of the user interface, and is configured to generate the interface element acquiring request which includes the operating coordinate and the context information. The content capturing program sub-module is configured to detect whether the context information satisfies a capturing condition.

In one or more embodiments, the obtaining module is configured to determine image data of a target image as the content information of the target interface element when the target interface element selected by the first selecting operation is the target image; or the obtaining module is configured to obtain a recognition result corresponding to a target image and determine the recognition result as the content information of the target interface element when the target interface element selected by the first selecting operation is the target image.

In one or more embodiments, the obtaining module is configured to: display a region selecting control unit by using an operating position of the first selecting operation as a reference position; capture a screen picture of the interface element in the region selecting control unit to obtain a target image upon receiving an acknowledgement signal; and determine the target image as the content information of the target interface element, or, obtain a recognition result corresponding to the target image and determine the recognition result as the content information of the target interface element.

In one or more embodiments, the obtaining module is configured to perform an optical character recognition (OCR) or an image recognition to the target image, to obtain a recognition result corresponding to the target image; or the obtaining module is configured to send the target image to an image processing server, and receive a recognition result corresponding to the target image which is fed back by the image processing server.

In one or more embodiments, the displaying module is further configured to display the interface element in the region selecting control unit in a magnified manner, by using an operating position of the first selecting operation as a reference position.

In one or more embodiments, the device further includes an adjusting module. The receiving module is further configured to receive an adjusting operation triggered on the region selecting control unit; and the adjusting module is configured to change a position and/or a size of the region selecting control unit according to the adjusting operation.

In one or more embodiments, the device further includes: the obtaining module is configured to obtain context information of the application program, the context information includes an identifier of the application program and/or an identifier of the user interface; the sending module is configured to send a searching request to the server, the searching request includes the content information of the target interface element and the context information. The server is configured to obtain at least one candidate item according to the content information; determine a searching keyword from the at least one candidate item according to the context information; and obtain the searching result information by searching according to the searching keyword.

In one or more embodiments, the receiving module is further configured to receive a press-and-hold operation triggered on the user interface, the press-and-hold operation is an operation with a touch-control duration time which is longer than a preset duration time; or the receiving module is further configured to receive a force-touch operation triggered on the user interface, the force-touch operation is an operation with a touch-control pressure which is larger than a preset pressure.

In one or more embodiments, the displaying module is configured to display a search-adjusting element in a superposed manner on the local region of the user interface; the receiving module is configured to receive a triggering signal triggered on the search-adjusting element; the displaying module is configured to display a candidate item exhibiting window corresponding to the search-adjusting element according to the triggering signal, the candidate item exhibiting window includes m candidate items corresponding to the target interface element, wherein m is a positive integer; the receiving module is configured to receive a second selecting operation for at least one of the candidate items, the second selecting operation is configured to determine a selected candidate item as a searching keyword; and the displaying module is configured to display searching result information corresponding to the searching keyword.

In one or more embodiments, the device further includes an invoking module configured to invoke an invoking interface of local application program, wherein an input parameter of the invoking interface includes a searching keyword corresponding to the target interface element; the receiving module is configured to receive a third selecting operation triggered on the first searching result information, the third selecting operation is configured to trigger invoking the local application program by the invoking interface to process the searching keyword; and the displaying module is configured to display a user interface of the local application program, the user interface includes a processing result obtained through processing the searching keyword by the local application program.

In one or more embodiments, the device includes: the invoking module is configured to invoke an invoking interface of network application program, wherein an input parameter of the invoking interface includes a searching keyword corresponding to the target interface element; the receiving module is configured to receive a fourth selecting operation triggered on the second searching result information, the fourth selecting operation is configured to trigger invoking the network application program by the invoking interface to process the searching keyword; and the displaying module is configured to display a user interface of the network application program, the user interface includes a processing result obtained through processing the searching keyword by the network application program.

In one or more embodiments, if the content information of the target interface element includes a title of film and television work, then the searching result information includes, but not limited to, at least one of: introduction information of the film and television work; rating information of the film and television work; author information of the film and television work; a subscribing entrance of the film and television work in a local application program or a network service; a sharing entrance of the film and television work in the local application program or the network service; a favorites entrance of the film and television work in the local application program; and a ticket-booking entrance of the film and television work in the network service.

Additionally or alternatively, if the content information of the target interface element includes a title of literature work, then the searching result information includes, but not limited to, at least one of: introduction information of the literature work; rating information of the literature work; author information of the literature work; a subscribing entrance of the literature work in the local application program; a sharing entrance of the literature work in the local application program; a favorites entrance of the literature work in the local application program; a reading experience entrance of the literature work in the network service; and a purchasing entrance of the literature work in the network service.

Additionally or alternatively, if the content information of the target interface element includes information of a person, then the searching result information includes, but not limited to, at least one of: WIKI information of the person; a social network service homepage of the person in the network service; latest news and trends of the person in the network service; a dynamic subscribing entrance of the person in the network service; a sharing entrance of the person in the local application program or the network service; and a favorites entrance of the person in the local application program or the network service.

Additionally or alternatively, if the content information of the target interface element includes information of a site, then the searching result information includes, but not limited to, at least one of: introduction information of the site; navigation information of the site in the local application program or the network service; map preview information of the site in the local application program or the network service; a taxi-calling entrance with the site as a destination; a sharing entrance of the site in the local application program or the network service; and a favorites entrance of the site in the local application program or the network service.

Additionally or alternatively, if the content information of the target interface element includes information of a merchant, then the searching result information includes, but not limited to, at least one of: introduction information of the merchant; a social network service homepage of the merchant in the network service; latest news and trends of the merchant in the network service; a preferential subscribing entrance of the merchant in the network service; contact information of the merchant; navigation information of the merchant in the local application program or the network service; map preview information of the merchant in the local application program or the network service; a taxi-calling entrance with the merchant as a destination; a sharing entrance of the merchant in the local application program or the network service; and a favorites entrance of the merchant in the local application program or the network service.

Additionally or alternatively, if the content information of the target interface element includes information of a commodity, then the searching result information includes, but not limited to, at least one of: introduction information of the commodity; a purchasing entrance of the commodity in the network service; price information of the commodity in at least one shopping channel; a preferential subscribing entrance of the commodity in the network service; a discount reminding entrance of the commodity in the network service; a history price trend checking entrance of the commodity in the local application program or the network service; a sharing entrance of the commodity in the local application program or the network service; and a favorites entrance of the commodity in the local application program or the network service.

The present disclosure further provides a computer-readable storage medium stored with at least one instruction which is loaded and executed by a processer to implement the information display method according to any of the foregoing embodiments.

Those skilled in the art would appreciate that all or part of the steps for realizing the foregoing embodiments may be implemented as hardware, or may be implemented as program instructions in combination with related hardware. The program instructions may be stored in a computer-readable storage medium which may be a read only memory, a magnetic disk, or an optical disk.

The terminology used in the present disclosure is for the purpose of describing exemplary embodiments only and is not intended to limit the present disclosure. As used in the present disclosure and the appended claims, the singular forms "a," "an" and "the" are intended to include the plural forms as well, unless the context clearly indicates otherwise. It shall also be understood that the terms "or" and "and/or" used herein are intended to signify and include any or all possible combinations of one or more of the associated listed items, unless the context clearly indicates otherwise.

It shall be understood that, although the terms "first," "second," "third," etc. may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if' may be understood to mean "when" or "upon" or "in response to" depending on the context.

Reference throughout this specification to "one embodiment," "an embodiment," "exemplary embodiment," or the like in the singular or plural means that one or more particular features, structures, or characteristics described in connection with an embodiment is included in at least one embodiment of the present disclosure. Thus, the appearances of the phrases "in one embodiment" or "in an embodiment," "in an exemplary embodiment," or the like in the singular or plural in various places throughout this specification are not necessarily all referring to the same embodiment. Furthermore, the particular features, structures, or characteristics in one or more embodiments may be combined in any suitable manner.

## Claims

1. A terminal (120) installed with an operating system and an application program, the terminal (120) comprising a processor and a memory, wherein the processor is configured to:
control a display to display a user interface (21, 131) of the application program, the user interface (21, 131) comprising at least one interface element;
receive a first selecting operation triggered on the user interface (21, 131);
select a target interface element (22) from the at least one interface element according to the first selecting operation; and
control the display to display searching result information (23) in a superposed manner on a local region of the user interface (21, 131) by the operating system, and the searching result information (23) corresponds to the target interface element (22);
wherein searching result information (23) is provided in an amount of n, in which at least two pieces of searching result information are different from each other, and n is a positive integer; and
wherein before displaying searching result information (23) in a superposed manner on a local region of the user interface (21, 131) by the operating system, the processor is further configured to:
obtain content information of the target interface element (22) according to the first selecting operation;
send a searching request to a server (140), wherein the searching request comprises the content information of the target interface element (22); and
receive the searching result information (23) fed back by the server (140),
wherein obtaining content information of the target interface element (22) according to the first selecting operation comprises:
determining the target interface element (22) according to an operating coordinate of the first selecting operation, and capturing content information of the target interface element (22);
wherein before determining the target interface element (22) according to an operating coordinate of the first selecting operation and capturing content information of the target interface element (22), the processor is further configured to:
obtain context information of the application program, wherein the application program is an application program running in the foreground, the user interface (21, 131) is a user interface running in the foreground of the application program, the context information comprises the identifier of the application program and/or the identifier of the user interface; the operating system is provided with an active stack in which an activity located at a stack top is corresponding to the user interface (21, 131) of the application program running in the foreground; a searching program obtains an identifier of the application program running in the foreground and an identifier of the user interface from the activity located at the stack top;detect whether context information of the application program satisfies a capturing condition according to a preset list that comprises a preset white list and/or a preset black list, the preset list being stored with context information satisfying the capturing condition and/or context information not satisfying the capturing condition; and
if the context information satisfies the capturing condition that indicates that the application program where the context information locates belongs to the preset white list, or doesn't belong to the preset black list, then perform a step of determining the target interface element (22) according to an operating coordinate of the first selecting operation and capturing content information of the target interface element (22);
if the context information doesn't satisfy the capturing condition, send acquisition failure information to the searching program.

2. The terminal (120) according to claim 1, wherein the processor is further configured to:
control the display to display n display elements in a superposed manner on a local region of the user interface (21, 131) by the operating system, wherein n is a positive integer, a display level of the display elements is higher than a display level of the user interface (21, 131), and each of the display elements is configured to display information of at least one piece of searching result information (23) thereon.

3. The terminal (120) according to claim 2, wherein the processor is further configured to:
control the display to display a list-view control unit in a superposed manner on a local region of the user interface (21, 131) by the operating system, the list-view control unit comprising n display elements, wherein n is an integer greater than 1, the n display elements are arranged sequentially along a first direction in the list-view control unit, and a tail of an i^{th} display element is connected to a header of an (i+1)^{th} display element, wherein i is a positive integer and i is less than n.

4. The terminal (120) according to claim 1, wherein the local region includes one of following regions:
a bottom region of the user interface (21, 131);
an adjacent region of the target interface element (22); and
an adjacent region of an operating position of the selecting operation.

5. The terminal (120) according to any one of claims 1-4, wherein after displaying searching result information (23) in a superposed manner on a local region of the user interface (21, 131) by the operating system, the processor is further configured to:
when receiving a first sliding operation on a j^{th} searching result information, the first sliding operation being an operation of sliding along a first direction, displaying the j^{th} searching result information in a sliding manner along the first direction by following the first sliding operation, to hide a portion of the j^{th} searching result information which is sliding off the local region and display a portion of a (j-1)^{th} searching result information which is sliding into the local region, wherein j is an integer greater than 1, and j is smaller than or equal to n; and
when receiving a second sliding operation on a k^{th} searching result information, the second sliding operation is an operation of sliding along a second direction, displaying the k^{th} searching result information in a sliding manner along the second direction by following the second sliding operation, to hide a portion of the k^{th} searching result information which is sliding off the local region and display a portion of a (k+1)^{th} searching result information which is sliding into the local region, wherein k is an integer smaller than n,
wherein the first direction is opposite to the second direction.

6. The terminal (120) according to any preceding claim, wherein the operating system comprises: a screen driving program; a searching program and a content capturing program; and wherein determining the target interface element (22) according to an operating coordinate of the first selecting operation and capturing content information of the target interface element (22) comprises:
reporting an operating coordinate of the first selecting operation to the searching program by the screen driving program;
sending an interface element acquiring request to the content capturing program by the searching program, wherein the interface element acquiring request is carried with the operating coordinate;
capturing content information of the target interface element (22), to which the operating coordinate corresponds, by the content capturing program; and
sending the content information of the target interface element (22) to the searching program by the content capturing program;
wherein the operating system comprises: a searching program and a content capturing program; and wherein detecting whether context information of the application program satisfies a capturing condition comprises:
obtaining context information of the application program by the searching program, the context information comprising an identifier of the application program and/or an identifier of the user interface (21, 131);
generating the interface element acquiring request which comprises the operating coordinate and the context information; and
detecting whether the context information satisfies the capturing condition by the content capturing program.

7. The terminal (120) according to any preceding claim, wherein the processor is further configured to:
when the target interface element (22) selected by the selecting operation is a target image, determine image data of the target image as the content information of the target interface element (22);
when the target interface element (22) selected by the selecting operation is the target image, obtain a recognition result corresponding to the target image and determining the recognition result as the content information of the target interface element (22);
control the display to display a region selecting control unit (30) by using an operating position of the selecting operation as a reference position;
capture a screen picture of the interface element in the region selecting control unit (30) to obtain a target image upon receiving an acknowledgement signal; and
determine the target image as the content information of the target interface element (22); or, obtain a recognition result corresponding to the target image and determining the recognition result as the content information of the target interface element (22).

8. The terminal (120) according to claim 7, wherein the processor is further configured to:
perform an optical character recognition (OCR) or an image recognition to the target image to obtain a recognition result corresponding to the target image; and
send the target image to an image processing server; and receiving the recognition result corresponding to the target image fed back by the image processing server.

9. The terminal (120) according to any preceding claim, wherein the processor is further configured to:
obtain context information of the application program, the context information comprises an identifier of the application program and/or an identifier of the user interface (21, 131); and
send a searching request to the server (140), the searching request comprising content information of the target interface element (22) and the context information;
wherein the server (140) is configured to obtain at least one candidate item according to the content information, determine a searching keyword from the at least one candidate item according to the context information, and obtain the searching result information (23) by searching according to the searching keyword.

10. The terminal (120) according to claim 1, wherein the processor is further configured to:
control the display to display a search-adjusting element in a superposed manner on the local region of the user interface (21, 131);
receive a triggering signal triggered on the search-adjusting element;
control the display to display a candidate item exhibiting window (153) corresponding to the search-adjusting element according to the triggering signal, wherein the candidate item exhibiting window (153) comprises m candidate items corresponding to the target interface element (22), wherein m is a positive integer;
receive a second selecting operation for at least one of the candidate items, wherein the second selecting operation is configured to select a target candidate item;
determine a searching keyword according to the target candidate item; and
control the display to display searching result information (23) corresponding to the searching keyword.

11. The terminal (120) according to claim 1, wherein at least one piece of first searching result information existed in the searching result information (23) comprises: an invoking interface configured to invoke a local application program, wherein an input parameter of the invoking interface comprises a searching keyword corresponding to the target interface element (22); and
wherein the processor is further configured to:
receive a third selecting operation triggered on the first searching result information, wherein the third selecting operation is configured to trigger invoking the local application program by the invoking interface to process the searching keyword; and
control the display to display a user interface (21, 131) of the local application program, wherein the user interface (21, 131) comprises a processing result obtained through processing the searching keyword by the local application program;
wherein the processor is further configured to:
receive a fourth selecting operation triggered on the second searching result information, wherein the fourth selecting operation is configured to trigger invoking the network service by the invoking interface to process the searching keyword; and
control the display to display a user interface (21, 131) of the network service, wherein the user interface (21, 131) comprises a processing result obtained through processing the searching keyword by the network service.

12. The terminal (120) according to claim 1, wherein the processor is configured to:
when the content information of the target interface element (22) comprises a title of film and television work, instruct the display to display the searching result information (23) that comprises at least one of following items: introduction information of the film and television work; rating information of the film and television work; author information of the film and television work; a subscribing entrance of the film and television work in a local application program or a network service; a sharing entrance of the film and television work in the local application program or the network service; a favorites entrance of the film and television work in the local application program; and a ticket-booking entrance of the film and television work in the network service;
when the content information of the target interface element (22) comprises a title of literature work, instruct the display to display the searching result information (23) that comprises at least one of following items: introduction information of the literature work; rating information of the literature work; author information of the literature work; a subscribing entrance of the literature work in the local application program; a sharing entrance of the literature work in the local application program; a favorites entrance of the literature work in the local application program; a reading experience entrance of the literature work in the network service; and a purchasing entrance of the literature work in the network service;
when the content information of the target interface element (22) comprises information of a person, instruct the display to display the searching result information (23) that comprises at least one of following items: WIKI information of the person; a social network service homepage of the person in the network service; latest news and trends of the person in the network service; a dynamic subscribing entrance of the person in the network service; a sharing entrance of the person in the local application program or the network service; and a favorites entrance of the person in the local application program or the network service;
when the content information of the target interface element (22) comprises information of a site, instruct the display to display the searching result information (23) that comprises at least one of following items: introduction information of the site; navigation information of the site in the local application program or the network service; map preview information of the site in the local application program or the network service; a taxi-calling entrance with the site as a destination; a sharing entrance of the site in the local application program or the network service; and a favorites entrance of the site in the local application program or the network service;
when the content information of the target interface element (22) comprises information of a merchant, instruct the display to display the searching result information (23) that comprises at least one of following items: introduction information of the merchant; a social network service homepage of the merchant in the network service; latest news and trends of the merchant in the network service; a preferential subscribing entrance of the merchant in the network service; contact information of the merchant; navigation information of the merchant in the local application program or the network service; map preview information of the merchant in the local application program or the network service; a taxi-calling entrance with the merchant as a destination; a sharing entrance of the merchant in the local application program or the network service; and a favorites entrance of the merchant in the local application program or the network service; and
when the content information of the target interface element (22) comprises information of a commodity, instruct the display to display the searching result information (23) that comprises at least one of following items: introduction information of the commodity; a purchasing entrance of the commodity in the network service; price information of the commodity in at least one shopping channel; a preferential subscribing entrance of the commodity in the network service; a discount reminding entrance of the commodity in the network service; a history price trend checking entrance of the commodity in the local application program or the network service; a sharing entrance of the commodity in the local application program or the network service; and a favorites entrance of the commodity in the local application program or the network service.

13. An information display method applied in a terminal (120) installed with an operating system and an application program, the method comprising:
displaying (S201) a user interface (21, 131) of the application program, wherein the user interface (21, 131) comprises at least one interface element;
receiving (S202) a first selecting operation triggered on the user interface (21, 131);
selecting (S203) a target interface element (22) from the at least one interface element according to the first selecting operation; and
displaying (S204) searching result information (23) in a superposed manner on a local region of the user interface (21, 131) by the operating system, the searching result information (23) corresponding to the target interface element (22);
wherein searching result information (23) is provided in an amount of n, in which at least two pieces of searching result information are different from each other, and n is a positive integer;
the method further comprising, before displaying searching result information (23) in a superposed manner on a local region of the user interface (21, 131) by the operating system:
obtaining content information of the target interface element (22) according to the first selecting operation;
sending a searching request to a server (140), wherein the searching request comprises the content information of the target interface element (22); and
receiving the searching result information (23) fed back by the server (140),
wherein obtaining content information of the target interface element (22) according to the first selecting operation comprises:
determining the target interface element (22) according to an operating coordinate of the first selecting operation, and capturing content information of the target interface element (22);
wherein the method further comprises before determining the target interface element (22) according to an operating coordinate of the first selecting operation and capturing content information of the target interface element (22):
obtain context information of the application program, wherein the application program is an application program running in the foreground, the user interface (21, 131) is a user interface running in the foreground of the application program, the context information comprises the identifier of the application program and/or the identifier of the user interface; the operating system is provided with an active stack in which an activity located at a stack top is corresponding to the user interface (21, 131) of the application program running in the foreground; a searching program obtains an identifier of the application program running in the foreground and an identifier of the user interface from the activity located at the stack top;
detecting whether context information of the application program satisfies a capturing condition according to a preset list that comprises a preset white list and/or a preset black list, the preset list being stored with context information satisfying the capturing condition and/or context information not satisfying the capturing condition; and
if the context information satisfies the capturing condition that indicates that the application program where the context information locates belongs to the preset white list, or doesn't belong to the preset black list, then performing a step of determining the target interface element (22) according to an operating coordinate of the first selecting operation and capturing content information of the target interface element (22);
if the context information doesn't satisfy the capturing condition, send acquisition failure information to the searching program..

14. A non-transitory computer-readable storage medium, stored with at least one instruction executable by a processer of a terminal (120), the at least one instruction, when executed, causes the processor to perform acts comprising:
instructing a display to display a user interface (21, 131) of the application program, wherein the user interface (21, 131) comprises at least one interface element;
receiving a first selecting operation triggered on the user interface (21, 131);
selecting a target interface element (22) from the at least one interface element according to the first selecting operation; and
instructing a display to display searching result information (23) in a superposed manner on a local region of the user interface (21, 131) by the operating system, the searching result information (23) corresponding to the target interface element (22);
wherein searching result information (23) is provided in an amount of n, in which at least two pieces of searching result information are different from each other, and n is a positive integer;
the acts further comprising, before displaying searching result information (23) in a superposed manner on a local region of the user interface (21, 131) by the operating system:
obtaining content information of the target interface element (22) according to the first selecting operation;
sending a searching request to a server (140), wherein the searching request comprises the content information of the target interface element (22); and
receiving the searching result information (23) fed back by the server (140),
wherein obtaining content information of the target interface element (22) according to the first selecting operation comprises:
determining the target interface element (22) according to an operating coordinate of the first selecting operation, and capturing content information of the target interface element (22);
wherein the acts further comprise before determining the target interface element (22) according to an operating coordinate of the first selecting operation and capturing content information of the target interface element (22):
obtain context information of the application program, wherein the application program is an application program running in the foreground, the user interface (21, 131) is a user interface running in the foreground of the application program, the context information comprises the identifier of the application program and/or the identifier of the user interface; the operating system is provided with an active stack in which an activity located at a stack top is corresponding to the user interface (21, 131) of the application program running in the foreground; a searching program obtains an identifier of the application program running in the foreground and an identifier of the user interface from the activity located at the stack top;
detecting whether context information of the application program satisfies a capturing condition according to a preset list that comprises a preset white list and/or a preset black list, the preset list being stored with context information satisfying the capturing condition and/or context information not satisfying the capturing condition; and
if the context information satisfies the capturing condition that indicates that the application program where the context information locates belongs to the preset white list, or doesn't belong to the preset black list, then performing a step of determining the target interface element (22) according to an operating coordinate of the first selecting operation and capturing content information of the target interface element (22) ;
if the context information doesn't satisfy the capturing condition, send acquisition failure information to the searching program.

## Patentansprüche

1. Endgerät (120), das mit einem Betriebssystem und einem Anwendungsprogramm installiert ist, wobei das Endgerät (120) einen Prozessor und einen Speicher umfasst, wobei der Prozessor konfiguriert ist zum:
Steuern eines Displays zur Anzeige einer Benutzerschnittstelle (21, 131) des Anwendungsprogramms, wobei die Benutzerschnittstelle (21, 131) mindestens ein Oberflächenelement umfasst;
Empfangen einer ersten Auswahloperation, die auf der Benutzerschnittstelle (21, 131) ausgelöst wird;
Auswählen eines Ziel-Schnittstellenelements (22) aus dem mindestens einen Schnittstellenelement gemäß der ersten Auswahloperation; und
Steuern der Anzeige, um Suchergebnisinformationen (23) in einer überlagerten Weise auf einem lokalen Bereich der Benutzerschnittstelle (21, 131) durch das Betriebssystem anzuzeigen, und wobei die Suchergebnisinformationen (23) dem Ziel-Schnittstellenelement (22) entsprechen;
wobei Suchergebnisinformationen (23) in einer Menge von n bereitgestellt werden, wobei mindestens zwei Teile der Suchergebnisinformationen voneinander verschieden sind und n eine positive ganze Zahl ist; und
wobei der Prozessor vor dem Anzeigen von Suchergebnisinformationen (23) in einer überlagerten Weise auf einem lokalen Bereich der Benutzerschnittstelle (21, 131) durch das Betriebssystem weiter konfiguriert ist zum:
Erhalten von Inhaltsinformationen des Ziel-Schnittstellenelements (22) gemäß der ersten Auswahloperation;
Senden einer Suchanfrage an einen Server (140), wobei die Suchanfrage die Inhaltsinformationen des Ziel-Schnittstellen-Elements (22) umfasst; und
Empfangen der vom Server (140) zurückgesendeten Suchergebnisinformationen (23),
wobei das Erhalten von Inhaltsinformationen des Ziel-Schnittstellenelements (22) gemäß der ersten Auswahloperation Folgendes umfasst:
Bestimmen des Ziel-Schnittstellenelements (22) gemäß einer Betriebskoordinate der ersten Auswahloperation und Aufnehmen von Inhaltsinformationen des Ziel-Schnittstellenelements (22);
wobei der Prozessor vor dem Bestimmen des Ziel-Schnittstellenelements (22) gemäß einer Betriebskoordinate der ersten Auswahloperation und dem Aufnehmen von Inhaltsinformationen des Ziel-Schnittstellenelements (22) weiter konfiguriert ist zum:
Erhalten von Kontextinformationen des Anwendungsprogramms, wobei das Anwendungsprogramm ein Anwendungsprogramm ist, das im Vordergrund läuft, die Benutzerschnittstelle (21, 131) eine Benutzerschnittstelle ist, die im Vordergrund des Anwendungsprogramms läuft, die Kontextinformationen die Kennung des Anwendungsprogramms und/oder die Kennung der Benutzerschnittstelle umfassen; das Betriebssystem mit einem aktiven Stapel bereitgestellt ist, in dem eine Aktivität, die sich an einer Stapelspitze befindet, der Benutzerschnittstelle (21, 131) des im Vordergrund laufenden Anwendungsprogramms entspricht; ein Suchprogramm eine Kennung des im Vordergrund laufenden Anwendungsprogramms und eine Kennung der Benutzerschnittstelle von der an der Stapelspitze befindlichen Aktivität erhält; Erkennen, ob Kontextinformationen des Anwendungsprogramms eine Aufnahmebedingung gemäß einer voreingestellten Liste erfüllen, die eine voreingestellte weiße Liste und/oder eine voreingestellte schwarze Liste umfasst, wobei die voreingestellte Liste mit Kontextinformationen gespeichert wird, die die Aufnahmebedingung erfüllen, und/oder Kontextinformationen, die die Aufnahmebedingung nicht erfüllen; und
wenn die Kontextinformationen die Aufnahmebedingung erfüllen, die angeben, dass das Anwendungsprogramm, in dem sich die Kontextinformationen befinden, zu der voreingestellten weißen Liste gehört oder nicht zu der voreingestellten schwarzen Liste gehört, dann Durchführen eines Schritts des Bestimmens des Ziel-Schnittstellenelements (22) gemäß einer Betriebskoordinate der ersten Auswahloperation und des Aufnehmens von Inhaltsinformationen des Ziel-Schnittstellenelements (22);
wenn die Kontextinformationen die Aufnahmebedingung nicht erfüllen, Senden von Erfassungsfehlerinformationen an das Suchprogramm.

2. Endgerät (120) nach Anspruch 1, wobei der Prozessor weiter konfiguriert ist zum:
Steuern der Anzeige, um n Anzeigeelemente in einer überlagerten Weise auf einem lokalen Bereich der Benutzerschnittstelle (21, 131) durch das Betriebssystem anzuzeigen, wobei n eine positive ganze Zahl ist, eine Anzeigeebene der Anzeigeelemente höher ist als eine Anzeigeebene der Benutzerschnittstelle (21, 131), und jedes der Anzeigeelemente konfiguriert ist, um Informationen von mindestens einem Teil der Suchergebnisinformationen (23) darauf anzuzeigen.

3. Endgerät (120) nach Anspruch 2, wobei der Prozessor weiter konfiguriert ist zum:
Steuern der Anzeige, um eine Listenansichts-Steuereinheit in einer überlagerten Weise auf einem lokalen Bereich der Benutzerschnittstelle (21, 131) durch das Betriebssystem anzuzeigen, wobei die Listenansichts-Steuereinheit n Anzeigeelemente umfasst, wobei n eine ganze Zahl größer als 1 ist, die n Anzeigeelemente sequentiell entlang einer ersten Richtung in der Listenansichts-Steuereinheit angeordnet sind, und ein Ende eines i-^{ten} Anzeigeelements mit einem Kopf eines (i+1)-^{ten} Anzeigeelements verbunden ist, wobei i eine positive ganze Zahl ist und i kleiner als n ist.

4. Endgerät (120) nach Anspruch 1, wobei die lokale Region eine der folgenden Regionen einschließt:
einen unteren Bereich der Benutzerschnittstelle (21, 131);
einen angrenzenden Bereich des Ziel-Schnittstellenelements (22); und
einen angrenzenden Bereich einer Arbeitsposition der Auswahloperation.

5. Endgerät (120) nach einem der Ansprüche 1-4, wobei nach dem Anzeigen von Suchergebnisinformationen (23) in einer überlagerten Weise auf einem lokalen Bereich der Benutzerschnittstelle (21, 131) durch das Betriebssystem der Prozessor weiter konfiguriert ist zum:
wenn eine erste Gleitoperation auf j-^{ten} Suchergebnisinformationen empfangen wird, wobei die erste Gleitoperation eine Operation des Gleitens entlang einer ersten Richtung ist, Anzeigen der j-^{ten} Suchergebnisinformationen in gleitender Weise entlang der ersten Richtung durch Folgen der ersten Gleitoperation, um einen Teil der j-^{ten} Suchergebnisinformationen, die aus dem lokalen Bereich herausgleiten, zu verbergen und einen Teil einer (j-1)^{ten} Suchergebnisinformationen anzuzeigen, die in den lokalen Bereich hineingleiten, wobei j eine ganze Zahl größer als 1 ist und j kleiner oder gleich n ist; und
wenn eine zweite Gleitoperation auf k-^{ten} Suchergebnisinformationen empfangen wird, wobei die zweite Gleitoperation eine Operation des Gleitens entlang einer zweiten Richtung ist, wobei die k-^{ten} Suchergebnisinformationen gleitend entlang der zweiten Richtung angezeigt werden, indem der zweiten Gleitoperation gefolgt wird, um einen Teil der k-^{ten} Suchergebnisinformationen zu verbergen, der aus dem lokalen Bereich herausgleitet, und einen Teil einer (k+1)^{ten} Suchergebnisinformationen anzuzeigen, der in den lokalen Bereich hineingleitet, wobei k eine ganze Zahl kleiner als n ist,
wobei die erste Richtung der zweiten Richtung entgegengesetzt ist.

6. Endgerät (120) nach einem der vorstehenden Ansprüche, wobei das Betriebssystem umfasst: ein Bildschirmsteuerungsprogramm; ein Suchprogramm und ein Inhaltsaufnahmeprogramm; und wobei das Bestimmen des Ziel-Schnittstellen-elements (22) gemäß einer Betriebskoordinate der ersten Auswahloperation und das Aufnehmen von Inhaltsinformationen des Ziel-Schnittstellenelements (22) umfasst:
Melden einer Betriebskoordinate der ersten Auswahloperation an das Suchprogramm durch das Bildschirmsteuerungsprogramm;
Senden einer Schnittstellenelement-Erfassungsanforderung an das Inhaltsaufnahmeprogramm durch das Suchprogramm, wobei die Schnittstellenelement-Erfassungsanforderung mit der Betriebskoordinate übertragen wird;
Aufnehmen von Inhaltsinformationen des Ziel-Schnittstellenelements (22), dem die Betriebskoordinate entspricht, durch das Inhaltsaufnahmeprogramm; und
Senden der Inhaltsinformationen des Ziel-Schnittstellenelements (22) an das Suchprogramm durch das Inhaltsaufnahmeprogramm;
wobei das Betriebssystem umfasst: ein Suchprogramm und ein Inhaltsaufnahmeprogramm; und wobei das Erkennen, ob die Kontextinformationen des Anwendungsprogramms eine Aufnahmebedingung erfüllen, Folgendes umfasst:
Erhalten von Kontextinformationen des Anwendungsprogramms durch das Suchprogramm, wobei die Kontextinformationen eine Kennung des Anwendungsprogramms und/oder eine Kennung der Benutzerschnittstelle (21, 131) umfassen;
Erzeugen der Anforderung zur Erfassung des Schnittstellenelements, die die Betriebskoordinate und die Kontextinformationen umfasst; und
Erkennen, ob die Kontextinformationen die Aufnahmebedingung durch das Inhaltsaufnahmeprogramm erfüllen.

7. Endgerät (120) nach einem vorstehenden Anspruch, wobei der Prozessor weiter konfiguriert ist zum:
wenn das durch den Auswahlvorgang ausgewählte Ziel-Schnittstellenelement (22) ein Zielbild ist, Bestimmen von Bilddaten des Zielbildes als die Inhaltsinformationen des Ziel-Schnittstellenelements (22);
wenn das durch den Auswahlvorgang ausgewählte Ziel-Schnittstellenelement (22) das Zielbild ist, Erhalten von einem dem Zielbild entsprechenden Erkennungsergebnis und Bestimmen des Erkennungsergebnisses als Inhaltsinformationen des Ziel-Schnittstellenelements (22);
Steuern der Anzeige, um eine Bereichsauswahl-Steuereinheit (30) anzuzeigen, indem eine Betriebsposition der Auswahloperation als eine Referenzposition verwendet wird;
Aufnehmen eines Bildschirmbildes des Schnittstellenelements in der Bereichsauswahlsteuereinheit (30), um ein Zielbild zu erhalten, nachdem ein Bestätigungssignal empfangen wurde; und
Bestimmen des Zielbildes als die Inhaltsinformationen des Ziel-Schnittstellenelements (22); oder Erhalten eines Erkennungsergebnisses entsprechend dem Zielbild und Bestimmen des Erkennungsergebnisses als die Inhaltsinformationen des Ziel-Schnittstellenelements (22).

8. Endgerät (120) nach Anspruch 7, wobei der Prozessor weiter konfiguriert ist zum:
Durchführen einer optischen Zeichenerkennung (OCR) oder einer Bilderkennung an dem Zielbild, um ein Erkennungsergebnis zu erhalten, das dem Zielbild entspricht; und
Senden des Zielbildes an einen Bildverarbeitungsserver; und Empfangen des dem Zielbild entsprechenden Erkennungsergebnisses, das von dem Bildverarbeitungsserver zurückgesendet wird.

9. Endgerät (120) nach einem vorstehenden Anspruch, wobei der Prozessor weiter konfiguriert ist zum:
Erhalten von Kontextinformationen des Anwendungsprogramms, wobei die Kontextinformationen eine Kennung des Anwendungsprogramms und/oder eine Kennung der Benutzerschnittstelle (21, 131) umfassen; und
Senden einer Suchanfrage an den Server (140), wobei die Suchanfrage Inhaltsinformationen des Ziel-Schnittstellenelements (22) und die Kontextinformationen umfasst;
wobei der Server (140) so konfiguriert ist, dass er mindestens ein Kandidatenelement gemäß den Inhaltsinformationen erhält, einen Suchbegriff aus dem mindestens einen Kandidatenelement gemäß den Kontextinformationen bestimmt und die Suchergebnisinformationen (23) durch Suchen gemäß dem Suchbegriff erhält.

10. Endgerät (120) nach Anspruch 1, wobei der Prozessor weiter konfiguriert ist zum:
Steuern der Anzeige, um ein Sucheinstellungselement in einer überlagerten Weise auf dem lokalen Bereich der Benutzerschnittstelle (21, 131) anzuzeigen;
Empfangen eines Auslösesignals, das auf dem Sucheinstellungselement ausgelöst wird;
Steuern der Anzeige, um ein Kandidatenelement-Anzeigefenster (153) anzuzeigen, das dem Sucheinstellungselement gemäß dem Auslösesignal entspricht, wobei das Kandidatenelement-Anzeigefenster (153) Kandidatenelemente umfasst, die dem Ziel-Schnittstellenelement (22) entsprechen, wobei m eine positive ganze Zahl ist;
Empfangen einer zweiten Auswahloperation für mindestens eines der Kandidatenelemente, wobei die zweite Auswahloperation so konfiguriert ist, dass sie ein Zielkandidatenelement auswählt;
Bestimmen eines Suchbegriffs entsprechend dem Zielkandidatenelement; und
Steuern des Displays zur Anzeige von Suchergebnisinformationen (23), die dem Suchbegriff entsprechen.

11. Endgerät (120) nach Anspruch 1, wobei mindestens ein Teil der ersten Suchergebnisinformationen, die in den Suchergebnisinformationen (23) vorhanden sind, Folgendes umfasst: eine Aufrufschnittstelle, die so konfiguriert ist, dass sie ein lokales Anwendungsprogramm aufruft, wobei ein Eingabeparameter der Aufrufschnittstelle einen Suchbegriff umfasst, das dem Ziel-Schnittstellenelement (22) entspricht; und
wobei der Prozessor weiter konfiguriert ist zum:
Empfangen einer dritten Auswahloperation, die durch die ersten Suchergebnisinformationen ausgelöst wird, wobei die dritte Auswahloperation so konfiguriert ist, dass sie das Aufrufen des lokalen Anwendungsprogramms durch die Aufrufschnittstelle auslöst, um den Suchbegriff zu verarbeiten; und
Steuern der Anzeige, um eine Benutzerschnittstelle (21, 131) des lokalen Anwendungsprogramms anzuzeigen, wobei die Benutzerschnittstelle (21, 131) ein Verarbeitungsergebnis umfasst, das durch die Verarbeitung des Suchbegriffs durch das lokale Anwendungsprogramm erhalten wurde;
wobei der Prozessor weiter konfiguriert ist zum:
Empfangen einer vierten Auswahloperation, die durch die zweiten Suchergebnisinformationen ausgelöst wird, wobei die vierte Auswahloperation so konfiguriert ist, dass sie das Aufrufen des Netzwerkdienstes durch die Aufrufschnittstelle auslöst, um den Suchbegriff zu verarbeiten; und
Steuern der Anzeige, um eine Benutzerschnittstelle (21, 131) des Netzwerkdienstes anzuzeigen, wobei die Benutzerschnittstelle (21, 131) ein Verarbeitungsergebnis umfasst, das durch die Verarbeitung des Suchbegriffs durch den Netzwerkdienst erhalten wurde.

12. Endgerät (120) nach Anspruch 1, wobei der Prozessor konfiguriert ist zum:
wenn die Inhaltsinformationen des Ziel-Schnittstellenelements (22) einen Titel eines Film- und Fernsehwerks umfassen, Anweisen der Anzeige, die Suchergebnisinformationen (23) anzuzeigen, die mindestens eines der folgenden Elemente umfassen: Einführungsinformationen des Film- und Fernsehwerkes; Bewertungsinformationen des Film- und Fernsehwerkes; Autoreninformationen des Film- und Fernsehwerkes; einen Abonnement-Eingang des Film- und Fernsehwerkes in einem lokalen Anwendungsprogramm oder einem Netzwerkdienst; einen Freigabe-Eingang des Film- und Fernsehwerkes in dem lokalen Anwendungsprogramm oder dem Netzwerkdienst; einen Favoriten-Eingang des Film- und Fernsehwerkes in dem lokalen Anwendungsprogramm; und einen Ticket-Booking-Eingang des Film- und Fernsehwerkes in dem Netzwerkdienst;
wenn die Inhaltsinformationen des Ziel-Schnittstellenelements (22) einen Titel eines literarischen Werks umfassen, Anweisen der Anzeige, die Suchergebnisinformationen (23) anzuzeigen, die mindestens eines der folgenden Elemente umfassen: Einführungsinformationen des literarischen Werks; Bewertungsinformationen des literarischen Werks; Autoreninformationen des literarischen Werks; einen Abonnementeingang des literarischen Werks in dem lokalen Anwendungsprogramm; einen Freigabe-Eingang des literarischen Werks in dem lokalen Anwendungsprogramm; einen Favoriten-Eingang des literarischen Werks in dem lokalen Anwendungsprogramm; einen Leseerfahrungs-Eingang des literarischen Werks in dem Netzwerkdienst; und einen Kauf-Eingang des literarischen Werks in dem Netzwerkdienst;
wenn die Inhaltsinformationen des Ziel-Schnittstellenelements (22) Informationen über eine Person umfassen, Anweisen der Anzeige, die Suchergebnisinformationen (23) anzuzeigen, die mindestens eines der folgenden Elemente umfassen: WIKI-Informationen der Person; eine soziale Netzwerkdienst-Homepage der Person in dem Netzwerkdienst; neueste Nachrichten und Trends der Person in dem Netzwerkdienst; einen dynamischen Anmeldungszugang der Person in dem Netzwerkdienst; einen Freigabezugang der Person in dem lokalen Anwendungsprogramm oder dem Netzwerkdienst; und einen Favoritenzugang der Person in dem lokalen Anwendungsprogramm oder dem Netzwerkdienst;
wenn die Inhaltsinformationen des Ziel-Schnittstellenelements (22) Informationen eines Ortes umfassen, Anweisen der Anzeige, die Suchergebnisinformationen (23) anzuzeigen, die mindestens eines der folgenden Elemente umfassen: Einführungsinformationen des Ortes; Navigationsinformationen des Ortes in dem lokalen Anwendungsprogramm oder dem Netzwerkdienst; Kartenvorschauminformationen des Ortes in dem lokalen Anwendungsprogramm oder dem Netzwerkdienst; einen Taxiruf-Eingang mit dem Ort als Bestimmungsort; einen Freigabe-Eingang des Ortes in dem lokalen Anwendungsprogramm oder dem Netzwerkdienst; und einen Favoriten-Eingang des Ortes in dem lokalen Anwendungsprogramm oder dem Netzwerkdienst;
wenn die Inhaltsinformationen des Ziel-Schnittstellenelements (22) Informationen eines Händlers umfassen, Anweisen der Anzeige, die Suchergebnisinformationen (23) anzuzeigen, die mindestens eines der folgenden Elemente umfassen: Einführungsinformationen des Händlers; eine soziale Netzwerkdienst-Homepage des Händlers in dem Netzwerkdienst; neueste Nachrichten und Trends des Händlers in dem Netzwerkdienst; einen bevorzugten Abonnementzugang des Händlers in dem Netzwerkdienst; Kontaktinformationen des Händlers; Navigationsinformationen des Händlers in dem lokalen Anwendungsprogramm oder dem Netzwerkdienst; Kartenvorschauminformationen des Händlers in dem lokalen Anwendungsprogramm oder dem Netzwerkdienst; einen Taxiruf-Eingang mit dem Händler als Bestimmungsort; einen Sharing-Eingang des Händlers in dem lokalen Anwendungsprogramm oder dem Netzwerkdienst; und einen Favoriten-Eingang des Händlers in dem lokalen Anwendungsprogramm oder dem Netzwerkdienst; und
wenn die Inhaltsinformationen des Ziel-Schnittstellenelements (22) Informationen über eine Ware umfassen, Anweisen der Anzeige, die Suchergebnisinformationen (23) anzuzeigen, die mindestens eines der folgenden Elemente umfassen: Einführungsinformationen der Ware; einen Kaufeingang der Ware im Netzwerkdienst; Preisinformationen der Ware in mindestens einem Einkaufskanal; einen bevorzugten Abonnementeingang der Ware im Netzwerkdienst; einen Rabatt-Erinnerungseingang der Ware im Netzwerkdienst; einen Verlaufspreis-Trendprüfungseingang der Ware im lokalen Anwendungsprogramm oder im Netzwerkdienst; einen Freigabe-Eingang der Ware im lokalen Anwendungsprogramm oder im Netzwerkdienst; und einen Favoriten-Eingang der Ware im lokalen Anwendungsprogramm oder im Netzwerkdienst.

13. Informationsanzeigeverfahren, das in einem Endgerät (120) angewendet wird, das mit einem Betriebssystem und einem Anwendungsprogramm installiert ist, wobei das Verfahren umfasst:
Anzeigen (S201) einer Benutzerschnittstelle (21, 131) des Anwendungsprogramms, wobei die Benutzerschnittstelle (21, 131) mindestens ein Oberflächenelement umfasst;
Empfangen (S202) einer ersten Auswahloperation, die auf der Benutzerschnittstelle (21, 131) ausgelöst wurde;
Auswählen (S203) eines Ziel-Schnittstellenelements (22) aus dem mindestens einen Schnittstellenelement gemäß der ersten Auswahloperation; und
Anzeigen (S204) von Suchergebnisinformationen (23) in einer überlagerten Weise auf einem lokalen Bereich der Benutzerschnittstelle (21, 131) durch das Betriebssystem, wobei die Suchergebnisinformationen (23) dem Ziel-Schnittstellenelement (22) entsprechen;
wobei Suchergebnisinformationen (23) in einer Menge von n bereitgestellt werden, wobei mindestens zwei Teile der Suchergebnisinformationen voneinander verschieden sind und n eine positive ganze Zahl ist;
wobei das Verfahren weiter umfasst, vor dem Anzeigen von Suchergebnisinformationen (23) in einer überlagerten Weise auf einem lokalen Bereich der Benutzerschnittstelle (21, 131) durch das Betriebssystem:
Erhalten von Inhaltsinformationen des Ziel-Schnittstellenelements (22) gemäß der ersten Auswahloperation;
Senden einer Suchanfrage an einen Server (140), wobei die Suchanfrage die Inhaltsinformationen des Ziel-Schnittstellen-Elements (22) umfasst; und
Empfangen der vom Server (140) zurückgesendeten Suchergebnisinformationen (23),
wobei das Erhalten von Inhaltsinformationen des Ziel-Schnittstellenelements (22) gemäß der ersten Auswahloperation Folgendes umfasst:
Bestimmen des Ziel-Schnittstellenelements (22) gemäß einer Betriebskoordinate der ersten Auswahloperation und Aufnehmen von Inhaltsinformationen des Ziel-Schnittstellenelements (22);
wobei das Verfahren weiter umfasst, vor der Bestimmung des Ziel-Schnittstellenelements (22) gemäß einer Betriebskoordinate der ersten Auswahloperation und des Aufnehmens von Inhaltsinformationen des Ziel-Schnittstellenelements (22):
Erhalten von Kontextinformationen des Anwendungsprogramms, wobei das Anwendungsprogramm ein im Vordergrund laufendes Anwendungsprogramm ist, die Benutzerschnittstelle (21, 131) eine im Vordergrund des Anwendungsprogramms laufende Benutzerschnittstelle ist, die Kontextinformationen die Kennung des Anwendungsprogramms und/oder die Kennung der Benutzerschnittstelle umfassen; das Betriebssystem mit einem aktiven Stapel bereitgestellt ist, in dem eine Aktivität, die sich an einer Stapelspitze befindet, der Benutzerschnittstelle (21, 131) des im Vordergrund laufenden Anwendungsprogramms entspricht; ein Suchprogramm eine Kennung des im Vordergrund laufenden Anwendungsprogramms und eine Kennung der Benutzerschnittstelle aus der Aktivität, die sich an der Stapelspitze befindet, erhält;
Erkennen, ob Kontextinformationen des Anwendungsprogramms eine Aufnahmebedingung gemäß einer voreingestellten Liste erfüllen, die eine voreingestellte weiße Liste und/oder eine voreingestellte schwarze Liste umfasst, wobei die voreingestellte Liste mit Kontextinformationen, die die Aufnahmebedingung erfüllen, und/oder Kontextinformationen, die die Aufnahmebedingung nicht erfüllen, gespeichert wird; und
wenn die Kontextinformationen die Aufnahmebedingung erfüllen, die angeben, dass das Anwendungsprogramm, in dem sich die Kontextinformationen befinden, zu der voreingestellten weißen Liste gehört oder nicht zu der voreingestellten schwarzen Liste gehört, dann Durchführen eines Schritts des Bestimmens des Ziel-Schnittstellenelements (22) gemäß einer Betriebskoordinate der ersten Auswahloperation und Aufnehmen von Inhaltsinformationen des Ziel-Schnittstellenelements (22);
wenn die Kontextinformationen die Aufnahmebedingung nicht erfüllen, Senden einer Erfassungsfehlerinformation an das Suchprogramm.

14. Nicht-transitorisches computerlesbares Speichermedium, auf dem mindestens eine Anweisung gespeichert ist, der von einem Prozessor eines Terminals (120) ausgeführt werden kann, wobei die mindestens eine Anweisung, wenn sie ausgeführt wird, den Prozessor veranlasst, Handlungen auszuführen, die Folgendes umfassen:
Anweisen einer Anzeige, eine Benutzerschnittstelle (21, 131) des Anwendungsprogramms anzuzeigen, wobei die Benutzerschnittstelle (21, 131) mindestens ein Schnittstellenelement umfasst;
Empfangen einer ersten Auswahloperation, der auf der Benutzerschnittstelle (21, 131) ausgelöst wurde;
Auswählen eines Ziel-Schnittstellenelements (22) aus dem mindestens einen Schnittstellenelement gemäß der ersten Auswahloperation; und
Anweisen einer Anzeige, Suchergebnisinformationen (23) in einer überlagerten Weise auf einem lokalen Bereich der Benutzerschnittstelle (21, 131) durch das Betriebssystem anzuzeigen, wobei die Suchergebnisinformationen (23) dem Ziel-Schnittstellenelement (22) entsprechen;
wobei Suchergebnisinformationen (23) in einer Menge von n bereitgestellt werden, wobei mindestens zwei Teile der Suchergebnisinformationen voneinander verschieden sind und n eine positive ganze Zahl ist;
wobei die Handlungen weiter umfassen, vor dem Anzeigen von Suchergebnisinformationen (23) in einer überlagerten Weise auf einem lokalen Bereich der Benutzerschnittstelle (21, 131), durch das Betriebssystem:
Erhalten von Inhaltsinformationen des Ziel-Schnittstellenelements (22) gemäß der ersten Auswahloperation;
Senden einer Suchanfrage an einen Server (140), wobei die Suchanfrage die Inhaltsinformationen des Ziel-Schnittstellen-Elements (22) umfasst; und
Empfangen der vom Server (140) zurückgesendeten Suchergebnisinformationen (23),
wobei das Erhalten von Inhaltsinformationen des Ziel-Schnittstellenelements (22) gemäß der ersten Auswahloperation Folgendes umfasst:
Bestimmen des Ziel-Schnittstellenelements (22) gemäß einer Betriebskoordinate der ersten Auswahloperation und Aufnehmen von Inhaltsinformationen des Ziel-Schnittstellenelements (22);
wobei die Handlungen weiter umfassen, vor dem Bestimmen des Ziel-Schnittstellenelements (22) gemäß einer Betriebskoordinate der ersten Auswahloperation und dem Aufnehmen von Inhaltsinformationen des Ziel-Schnittstellenelements (22):
Erhalten von Kontextinformationen des Anwendungsprogramms, wobei das Anwendungsprogramm ein im Vordergrund laufendes Anwendungsprogramm ist, die Benutzerschnittstelle (21, 131) eine im Vordergrund des Anwendungsprogramms laufende Benutzerschnittstelle ist, die Kontextinformationen die Kennung des Anwendungsprogramms und/oder die Kennung der Benutzerschnittstelle umfassen; das Betriebssystem mit einem aktiven Stapel bereitgestellt ist, in dem eine Aktivität, die sich an einer Stapelspitze befindet, der Benutzerschnittstelle (21, 131) des im Vordergrund laufenden Anwendungsprogramms entspricht; ein Suchprogramm eine Kennung des im Vordergrund laufenden Anwendungsprogramms und eine Kennung der Benutzerschnittstelle aus der Aktivität, die sich an der Stapelspitze befindet, erhält;
Erkennen, ob Kontextinformationen des Anwendungsprogramms eine Aufnahmebedingung gemäß einer voreingestellten Liste erfüllen, die eine voreingestellte weiße Liste und/oder eine voreingestellte schwarze Liste umfasst, wobei die voreingestellte Liste mit Kontextinformationen, die die Aufnahmebedingung erfüllen, und/oder Kontextinformationen, die die Aufnahmebedingung nicht erfüllen, gespeichert wird; und
wenn die Kontextinformationen die Aufnahmebedingung erfüllen, die angeben, dass das Anwendungsprogramm, in dem sich die Kontextinformationen befinden, zu der voreingestellten weißen Liste gehört oder nicht zu der voreingestellten schwarzen Liste gehört, dann Durchführen eines Schritts des Bestimmens des Ziel-Schnittstellen-elements (22) gemäß einer Betriebskoordinate der ersten Auswahloperation und Aufnehmen von Inhaltsinformationen des Ziel-Schnittstellenelements (22);
wenn die Kontextinformationen die Aufnahmebedingung nicht erfüllen, Senden von Erfassungsfehlerinformationen an das Suchprogramm.

## Revendications

1. Terminal (120) sur lequel sont installés système d'exploitation et un programme d'application, le terminal (120) comprenant un processeur et une mémoire, dans lequel le processeur est configuré pour :
commander un dispositif d'affichage pour afficher une interface utilisateur (21, 131) du programme d'application, l'interface utilisateur (21, 131) comprenant au moins un élément d'interface ;
recevoir une première opération de sélection déclenchée sur l'interface utilisateur (21, 131) ;
sélectionner un élément d'interface cible (22) à partir de l'au moins un élément d'interface selon la première opération de sélection ; et
commander le dispositif d'affichage pour afficher des informations de résultat de recherche (23) de manière superposée sur une région locale de l'interface utilisateur (21, 131) à l'aide du système d'exploitation, et les informations de résultat de recherche (23) correspondent à l'élément d'interface cible (22) ;
dans lequel les informations de résultat de recherche (23) sont fournies en une quantité de n, dans lesquelles au moins deux parties d'informations de résultat de recherche sont différentes l'une de l'autre, et n est un nombre entier positif ; et
dans lequel, avant l'affichage des informations de résultat de recherche (23) de manière superposée sur une région locale de l'interface utilisateur (21, 131) à l'aide du système d'exploitation, le processeur est en outre configuré pour :
obtenir des informations de contenu de l'élément d'interface cible (22) selon la première opération de sélection ;
envoyer une demande de recherche à un serveur (140), dans lequel la demande de recherche comprend les informations de contenu de l'élément d'interface cible (22) ; et
recevoir les informations de résultat de recherche (23) fournies en retour par le serveur (140),
dans lequel l'obtention d'informations de contenu de l'élément d'interface cible (22) selon la première opération de sélection comprend :
la détermination de l'élément d'interface cible (22) selon une coordonnée d'exploitation de la première opération de sélection, et la capture d'informations de contenu de l'élément d'interface cible (22) ;
dans lequel, avant la détermination de l'élément d'interface cible (22) selon une coordonnée d'exploitation de la première opération de sélection et la capture d'informations de contenu de l'élément d'interface cible (22), le processeur est en outre configuré pour :
obtenir des informations de contexte du programme d'application, dans lequel le programme d'application est un programme d'application en exécution dans l'avant-plan, l'interface utilisateur (21, 131) est une interface utilisateur en exécution dans l'avant-plan du programme d'application, les informations de contexte comprennent l'identifiant du programme d'application et/ou l'identifiant de l'interface utilisateur ; le système d'exploitation est pourvu d'une pile active dans laquelle une activité située en haut d'une pile correspond à l'interface utilisateur (21, 131) du programme d'application en exécution dans l'avant-plan ; un programme de recherche obtient un identifiant du programme d'application en exécution dans l'avant-plan et un identifiant de l'interface utilisateur à partir de l'activité située en haut de la pile ; détecter le fait que des informations de contexte du programme d'application satisfont, ou ne satisfont pas, à une condition de capture selon une liste prédéfinie qui comprend une liste blanche prédéfinie et/ou une liste noire prédéfinie, la liste prédéfinie stockant dans celle-ci des informations de contexte satisfaisant à la condition de capture et/ou des informations de contexte ne satisfaisant pas à la condition de capture ; et
si les informations de contexte satisfont à la condition de capture, ceci indique que le programme d'application où les informations de contexte sont situées appartient à la liste blanche prédéfinie, ou n'appartient pas à la liste noire prédéfinie, alors réaliser une étape de la détermination de l'élément d'interface cible (22) selon une coordonnée d'exploitation de la première opération de sélection et de la capture d'informations de contenu de l'élément d'interface cible (22) ;
si les informations de contexte ne satisfont pas à la condition de capture, envoyer des informations d'échec d'acquisition au programme de recherche.

2. Terminal (120) selon la revendication 1, dans lequel le processeur est en outre configuré pour :
commander le dispositif d'affichage pour afficher n éléments d'affichage de manière superposée sur une région locale de l'interface utilisateur (21, 131) à l'aide du système d'exploitation, dans lequel n est un nombre entier positif, un niveau d'affichage des éléments d'affichage est plus haut qu'un niveau d'affichage de l'interface utilisateur (21, 131), et chacun des éléments d'affichage est configuré pour afficher des informations d'au moins une partie d'informations de résultat de recherche (23) sur celui-ci.

3. Terminal (120) selon la revendication 2, dans lequel le processeur est en outre configuré pour :
commander le dispositif d'affichage pour afficher une unité de commande de vue de liste de manière superposée sur une région locale de l'interface utilisateur (21, 131) à l'aide du système d'exploitation, l'unité de commande de vue de liste comprenant n éléments d'affichage, dans lequel n est un nombre entier supérieur à 1, les n éléments d'affichage sont agencés séquentiellement le long d'une première direction dans l'unité de commande de vue de liste, et une queue d'un i^{ième} élément d'affichage est connectée à un en-tête d'un (i+1)^{ième} élément d'affichage, dans lequel i est un nombre entier positif et i est inférieur à n.

4. Terminal (120) selon la revendication 1, dans lequel la région locale inclut une des régions suivantes :
une région inférieure de l'interface utilisateur (21, 131) ;
une région adjacente de l'élément d'interface cible (22) ; et
une région adjacente d'une position d'exploitation de l'opération de sélection.

5. Terminal (120) selon l'une quelconque des revendications 1-4, dans lequel, après l'affichage d'informations de résultat de recherche (23) de manière superposée sur une région locale de l'interface utilisateur (21, 131) à l'aide du système d'exploitation, le processeur est en outre configuré pour :
lors de la réception d'une première opération de glisser sur une j^{ième} information de résultat de recherche, la première opération de glisser étant une opération consistant à glisser le long d'une première direction, l'affichage de la j^{ième} information de résultat de recherche de manière glissante le long de la première direction en suivant la première opération de glisser, pour cacher une portion de la j^{ième} information de résultat de recherche qui est en train de glisser pour quitter la région locale et afficher une portion d'une (j-1)^{ième} information de résultat de recherche qui est en train de glisser pour entrer dans la région locale, dans lequel j est un nombre entier supérieur à 1, et j est inférieur ou égal à n ; et
lors de la réception d'une seconde opération de glisser sur une k^{ième} information de résultat de recherche, la seconde opération de glisser est une opération consistant à glisser le long d'une seconde direction, l'affichage de la k^{ième} information de résultat de recherche de manière glissante le long de la seconde direction en suivant la seconde opération de glisser, pour cacher une portion de la k^{ième} information de résultat de recherche qui est en train de glisser pour quitter la région locale et afficher une portion d'une (k+1)^{ième} information de résultat de recherche qui est en train de glisser pour entrer dans la région locale, dans lequel k est un nombre entier inférieur à n,
dans lequel la première direction est opposée à la seconde direction.

6. Terminal (120) selon une quelconque revendication précédente, dans lequel le système d'exploitation comprend : un programme de pilotage d'écran ; un programme de recherche et un programme de capture de contenu ; et dans lequel la détermination de l'élément d'interface cible (22) selon une coordonnée d'exploitation de la première opération de sélection et la capture d'informations de contenu de l'élément d'interface cible (22) comprennent :
la transmission d'un rapport d'une coordonnée d'exploitation de la première opération de sélection au programme de recherche, par le programme de pilotage d'écran ;
l'envoi d'une demande d'acquisition d'élément d'interface au programme de capture de contenu, par le programme de recherche, dans lequel la demande d'acquisition d'élément d'interface est transportée avec la coordonnée d'exploitation ;
la capture d'informations de contenu de l'élément d'interface cible (22), auquel la coordonnée d'exploitation correspond, par le programme de capture de contenu ; et
l'envoi des informations de contenu de l'élément d'interface cible (22) au programme de recherche, par le programme de capture de contenu ;
dans lequel le système d'exploitation comprend : un programme de recherche et un programme de capture de contenu ; et dans lequel la détection du fait que des informations de contexte du programme d'application satisfont, ou ne satisfont pas, à une condition de capture comprend :
l'obtention d'informations de contexte du programme d'application, par le programme de recherche, les informations de contexte comprenant un identifiant du programme d'application et/ou un identifiant de l'interface utilisateur (21, 131) ;
la génération de la demande d'acquisition d'élément d'interface qui comprend la coordonnée d'exploitation et les informations de contexte ; et
la détection du fait que les informations de contexte satisfont, ou ne satisfont pas, à la condition de capture, par le programme de capture de contenu.

7. Terminal (120) selon une quelconque revendication précédente, dans lequel le processeur est en outre configuré pour :
lorsque l'élément d'interface cible (22) sélectionné par l'opération de sélection est une image cible, déterminer des données d'image de l'image cible comme étant des informations de contenu de l'élément d'interface cible (22) ;
lorsque l'élément d'interface cible (22) sélectionné par l'opération de sélection est l'image cible, obtenir un résultat de reconnaissance correspondant à l'image cible et la détermination du résultat de reconnaissance comme étant les informations de contenu de l'élément d'interface cible (22) ;
commander le dispositif d'affichage pour afficher une unité de commande de sélection de région (30) en utilisant une position d'exploitation de l'opération de sélection en tant que position de référence ;
capturer une représentation d'écran de l'élément d'interface dans l'unité de commande de sélection de région (30) pour obtenir une image cible lors de la réception d'un accusé de réception signal ; et
déterminer l'image cible comme étant les informations de contenu de l'élément d'interface cible (22) ; ou, obtenir un résultat de reconnaissance correspondant à l'image cible et la détermination du résultat de reconnaissance comme étant les informations de contenu de l'élément d'interface cible (22).

8. Terminal (120) selon la revendication 7, dans lequel le processeur est en outre configuré pour :
réaliser une reconnaissance optique de caractères (OCR) ou une reconnaissance d'image sur l'image cible pour obtenir un résultat de reconnaissance correspondant à l'image cible ; et
envoyer l'image cible à un serveur de traitement d'image ; et recevoir le résultat de reconnaissance correspondant à l'image cible fournie en retour par le serveur de traitement d'image.

9. Terminal (120) selon une quelconque revendication précédente, dans lequel le processeur est en outre configuré pour :
obtenir des informations de contexte du programme d'application, les informations de contexte comprennent un identifiant du programme d'application et/ou un identifiant de l'interface utilisateur (21, 131) ; et
envoyer une demande de recherche au serveur (140), la demande de recherche comprenant des informations de contenu de l'élément d'interface cible (22) et les informations de contexte ;
dans lequel le serveur (140) est configuré pour obtenir au moins un article candidat selon les informations de contenu, déterminer un mot-clef de recherche à partir de l'au moins un article candidat selon les informations de contexte, et obtenir les informations de résultat de recherche (23) en effectuant une recherche selon le mot-clef de recherche.

10. Terminal (120) selon la revendication 1, dans lequel le processeur est en outre configuré pour :
commander le dispositif d'affichage pour afficher un élément d'ajustement de recherche de manière superposée sur la région locale de l'interface utilisateur (21, 131) ;
recevoir un signal de déclenchement, déclenché sur l'élément d'ajustement de recherche ;
commander le dispositif d'affichage pour afficher une fenêtre de présentation d'article candidat (153) correspondant à l'élément d'ajustement de recherche selon le signal de déclenchement, dans lequel la fenêtre de présentation d'article candidat (153) comprend m articles candidats correspondant à l'élément d'interface cible (22), dans lequel m est un nombre entier positif ;
recevoir une deuxième opération de sélection pour au moins un des articles candidats, dans lequel la deuxième opération de sélection est configurée pour sélectionner un article candidat cible ;
déterminer un mot-clef de recherche selon l'article candidat cible ; et
commander le dispositif d'affichage pour afficher des informations de résultat de recherche (23) correspondant au mot-clef de recherche.

11. Terminal (120) selon la revendication 1, dans lequel au moins une partie de premières informations de résultat de recherche existant dans les informations de résultat de recherche (23) comprend : une interface d'appel configurée pour appeler un programme d'application local, dans lequel un paramètre d'entrée de l'interface d'appel comprend un mot-clef de recherche correspondant à l'élément d'interface cible (22) ; et
dans lequel le processeur est en outre configuré pour :
recevoir une troisième opération de sélection déclenchée sur les première informations de résultat de recherche, dans lequel la troisième opération de sélection est configurée pour déclencher l'appel du programme d'application local, à l'aide de l'interface d'appel, pour traiter le mot-clef de recherche ; et
commander le dispositif d'affichage pour afficher une interface utilisateur (21, 131) du programme d'application local, dans lequel l'interface utilisateur (21, 131) comprend un résultat de traitement obtenu par le biais de traitement du mot-clef de recherche par le programme d'application local ;
dans lequel le processeur est en outre configuré pour :
recevoir une quatrième opération de sélection déclenchée sur les secondes informations de résultat de recherche, dans lequel la quatrième opération de sélection est configurée pour déclencher l'appel du service de réseau, à l'aide de l'interface d'appel, pour traiter le mot-clef de recherche ; et
commander le dispositif d'affichage pour afficher une interface utilisateur (21, 131) du service de réseau, dans lequel l'interface utilisateur (21, 131) comprend un résultat de traitement obtenu par le biais de traitement du mot-clef de recherche par le service de réseau.

12. Terminal (120) selon la revendication 1, dans lequel le processeur est configuré pour :
lorsque les informations de contenu de l'élément d'interface cible (22) comprennent un titre de film et d'ouvrage télévisuel, transmettre l'instruction, au dispositif d'affichage, d'afficher les informations de résultat de recherche (23) qui comprennent au moins un parmi les articles suivants : des informations d'introduction du film et de l'ouvrage télévisuel ; des informations de classification du film et de l'ouvrage télévisuel ; des informations d'auteur du film et de l'ouvrage télévisuel ; une entrée d'abonnement du film et de l'ouvrage télévisuel dans un programme d'application local ou un service de réseau ; une entrée de partage du film et de l'ouvrage télévisuel dans le programme d'application local ou le service de réseau ; une entrée de favoris du film et de l'ouvrage télévisuel dans le programme d'application local ; et une entrée de réservation de billet du film et de l'ouvrage télévisuel dans le service de réseau ;
lorsque les informations de contenu de l'élément d'interface cible (22) comprennent un titre d'ouvrage littéraire, transmettre l'instruction, au dispositif d'affichage, d'afficher les informations de résultat de recherche (23) qui comprend au moins un parmi les articles suivants : des informations d'introduction de l'ouvrage littéraire ; des informations de classification de l'ouvrage littéraire ; des informations d'auteur de l'ouvrage littéraire ; une entrée d'abonnement de l'ouvrage littéraire dans le programme d'application local ; une entrée de partage de l'ouvrage littéraire dans le programme d'application local ; une entrée de favoris de l'ouvrage littéraire dans le programme d'application local ; une entrée d'expérience de lecture de l'ouvrage littéraire dans le service de réseau ; et une entrée d'achat de l'ouvrage littéraire dans le service de réseau ;
lorsque les informations de contenu de l'élément d'interface cible (22) comprennent des informations d'une personne, transmettre l'instruction, au dispositif d'affichage, d'afficher les informations de résultat de recherche (23) qui comprennent au moins un parmi les articles suivants : des informations WIKI de la personne ; une page d'accueil de service de réseau social de la personne dans le service de réseau ; des actualités et des tendances les plus récentes de la personne dans le service de réseau ; une entrée d'abonnement dynamique de la personne dans le service de réseau ; une entrée de partage de la personne dans le programme d'application local ou le service de réseau ; et une entrée de favoris de la personne dans le programme d'application local ou le service de réseau ;
lorsque les informations de contenu de l'élément d'interface cible (22) comprend des informations d'un site, transmettre l'instruction, au dispositif d'affichage, d'afficher les informations de résultat de recherche (23) qui comprennent au moins un parmi les articles suivants : des informations d'introduction du site ; des informations navigation du site dans le programme d'application local ou le service de réseau ; des informations de prévisualisation de carte du site dans le programme d'application local ou du service de réseau ; une entrée d'appel de taxi avec le site en tant que destination ; une entrée de partage du site dans le programme d'application local ou le service de réseau ; et une entrée de favoris du site dans le programme d'application local ou le service de réseau ;
lorsque les informations de contenu de l'élément d'interface cible (22) comprennent des informations d'un commerçant, transmettre l'instruction, au dispositif d'affichage, d'afficher les informations de résultat de recherche (23) qui comprennent au moins un parmi les articles suivants : des informations d'introduction du commerçant; une page d'accueil de service de réseau social du commerçant dans le service de réseau ; des actualités et des tendances les plus récentes du commerçant dans le service de réseau ; une entrée d'abonnement préférentiel du commerçant dans le service de réseau ; des informations de contact du commerçant ; des informations de navigation du commerçant dans le programme d'application local ou le service de réseau ; des informations de prévisualisation de carte du commerçant dans le programme d'application local ou le service de réseau ; une entrée d'appel de taxi avec le commerçant en tant que destination ; une entrée de partage du commerçant dans le programme d'application local ou le service de réseau ; et une entrée de favoris du commerçant dans le programme d'application local ou le service de réseau ; et
lorsque les informations de contenu de l'élément d'interface cible (22) comprennent des informations d'une marchandise, transmettre l'instruction, au dispositif d'affichage, d'afficher les informations de résultat de recherche (23) qui comprennent au moins un parmi les articles suivants : des informations d'introduction de la marchandise ; une entrée d'achat de la marchandise dans le service de réseau ; des informations de prix de la marchandise dans au moins une chaîne de téléachat; une entrée d'abonnement préférentiel de la marchandise dans le service de réseau ; une entrée de rappel de ristourne de la marchandise dans le service de réseau ; une entrée de contrôle de tendance de prix historique de la marchandise dans le programme d'application local ou le service de réseau ; une entrée de partage de la marchandise dans le programme d'application local ou le service de réseau ; et une entrée de favoris de la marchandise dans le programme d'application local ou le service de réseau.

13. Procédé d'affichage d'informations appliqué dans un terminal (120) sur lequel sont installés un système d'exploitation et un programme d'application, le procédé comprenant :
l'affichage (S201) d'une interface utilisateur (21, 131) du programme d'application, dans lequel l'interface utilisateur (21, 131) comprend au moins un élément d'interface ;
la réception (S202) d'une première opération de sélection déclenchée sur l'interface utilisateur (21, 131) ;
la sélection (S203) d'un élément d'interface cible (22) à partir de l'au moins un élément d'interface selon la première opération de sélection ; et
l'affichage (S204) d'informations de résultat de recherche (23) de manière superposée sur une région locale de l'interface utilisateur (21, 131) à l'aide du système d'exploitation, les informations de résultat de recherche (23) correspondant à l'élément d'interface cible (22) ;
dans lequel des informations de résultat de recherche (23) sont fournies en une quantité de n, dans lesquelles au moins deux parties d'informations de résultat de recherche sont différentes l'une de l'autre, et n est un nombre entier positif ;
le procédé comprenant en outre, avant l'affichage d'informations de résultat de recherche (23) de manière superposée sur une région locale de l'interface utilisateur (21, 131) à l'aide du système d'exploitation :
l'obtention d'informations de contenu de l'élément d'interface cible (22) selon la première opération de sélection ;
l'envoi d'une demande de recherche à un serveur (140), dans lequel la demande de recherche comprend les informations de contenu de l'élément d'interface cible (22) ; et
la réception des informations de résultat de recherche (23) fournies en retour par le serveur (140),
dans lequel l'obtention d'informations de contenu de l'élément d'interface cible (22) selon la première opération de sélection comprend :
la détermination de l'élément d'interface cible (22) selon une coordonnée d'exploitation de la première opération de sélection, et la capture d'informations de contenu de l'élément d'interface cible (22) ;
dans lequel le procédé comprend en outre, avant la détermination de l'élément d'interface cible (22) selon une coordonnée d'exploitation de la première opération de sélection et la capture d'informations de contenu de l'élément d'interface cible (22) ;
l'obtention d'informations de contexte du programme d'application, dans lequel le programme d'application est un programme d'application en exécution dans l'avant-plan, l'interface utilisateur (21, 131) est une interface utilisateur en exécution dans l'avant-plan du programme d'application, les informations de contexte comprennent l'identifiant du programme d'application et/ou l'identifiant de l'interface utilisateur ; le système d'exploitation est pourvu d'une pile active dans laquelle une activité située en haut d'une pile correspond à l'interface utilisateur (21, 131) du programme d'application en exécution dans l'avant-plan ; un programme de recherche obtient un identifiant du programme d'application en exécution dans l'avant-plan et un identifiant de l'interface utilisateur à partir de l'activité située en haut de la pile ;
la détection du fait que des informations de contexte du programme d'application satisfont, ou ne satisfont pas, à une condition de capture selon une liste prédéfinie qui comprend une liste blanche prédéfinie et/ou une liste noire prédéfinie, la liste prédéfinie stockant dans celle-ci des informations de contexte satisfaisant à la condition de capture et/ou des informations de contexte ne satisfaisant pas à la condition de capture ; et
si les informations de contexte satisfont à la condition de capture, ceci indique que le programme d'application où les informations de contexte sont situées appartient à la liste blanche prédéfinie, ou n'appartient pas à la liste noire prédéfinie, puis la réalisation d'une étape de la détermination de l'élément d'interface cible (22) selon une coordonnée d'exploitation de la première opération de sélection et de la capture d'informations de contenu de l'élément d'interface cible (22) ;
si les informations de contexte ne satisfont pas à la condition de capture, l'envoi d'informations d'échec d'acquisition au programme de recherche.

14. Support non transitoire de stockage lisible par ordinateur, stockant sur celui-ci au moins une instruction exécutable par un processeur d'un terminal (120), l'au moins une instruction, lorsqu'elle est exécutée, fait en sorte que le processeur réalise des actions comprenant :
la transmission de l'instruction, à un dispositif d'affichage, d'afficher une interface utilisateur (21, 131) du programme d'application, dans lequel l'interface utilisateur (21, 131) comprend au moins un élément d'interface ;
la réception d'une première opération de sélection déclenchée sur l'interface utilisateur (21, 131) ;
la sélection d'un élément d'interface cible (22) à partir de l'au moins un élément d'interface selon la première opération de sélection ; et
la transmission de l'instruction, à un dispositif d'affichage, d'afficher des informations de résultat de recherche (23) de manière superposée sur une région locale de l'interface utilisateur (21, 131) à l'aide du système d'exploitation, les informations de résultat de recherche (23) correspondant à l'élément d'interface cible (22) ;
dans lequel des informations de résultat de recherche (23) sont fournies en une quantité de n, dans lesquelles au moins deux parties d'informations de résultat de recherche sont différentes l'une de l'autre, et n est un nombre entier positif ;
les actions comprenant en outre, avant l'affichage d'informations de résultat de recherche (23) de manière superposée sur une région locale de l'interface utilisateur (21, 131) à l'aide du système d'exploitation :
l'obtention d'informations de contenu de l'élément d'interface cible (22) selon la première opération de sélection ;
l'envoi d'une demande de recherche à un serveur (140), dans lequel la demande de recherche comprend les informations de contenu de l'élément d'interface cible (22) ; et
la réception des informations de résultat de recherche (23) fournies en retour par le serveur (140),
dans lequel l'obtention d'informations de contenu de l'élément d'interface cible (22) selon la première opération de sélection comprend :
la détermination de l'élément d'interface cible (22) selon une coordonnée d'exploitation de la première opération de sélection, et la capture d'informations de contenu de l'élément d'interface cible (22) ;
dans lequel les actions comprennent en outre, avant la détermination de l'élément d'interface cible (22) selon une coordonnée d'exploitation de la première opération de sélection et la capture d'informations de contenu de l'élément d'interface cible (22) :
l'obtention d'informations de contexte du programme d'application, dans lequel le programme d'application est un programme d'application en exécution dans l'avant-plan, l'interface utilisateur (21, 131) est une interface utilisateur en exécution dans l'avant-plan du programme d'application, les informations de contexte comprennent l'identifiant du programme d'application et/ou l'identifiant de l'interface utilisateur ; le système d'exploitation est pourvu d'une pile active dans laquelle une activité située en haut d'une pile correspond à l'interface utilisateur (21, 131) du programme d'application en exécution dans l'avant-plan ; un programme de recherche obtient un identifiant du programme d'application en exécution dans l'avant-plan et un identifiant de l'interface utilisateur à partir de l'activité située en haut de la pile ;
la détection du fait que des informations de contexte du programme d'application satisfont, ou ne satisfont pas, à une condition de capture selon une liste prédéfinie qui comprend une liste blanche prédéfinie et/ou une liste noire prédéfinie, la liste prédéfinie stockant dans celle-ci des informations de contexte satisfaisant à la condition de capture et/ou des informations de contexte ne satisfaisant pas à la condition de capture ; et
si les informations de contexte satisfont à la condition de capture, ceci indique que le programme d'application où les informations de contexte sont situées appartient à la liste blanche prédéfinie, ou n'appartient pas à la liste noire prédéfinie, puis la réalisation d'une étape de la détermination de l'élément d'interface cible (22) selon une coordonnée d'exploitation de la première opération de sélection et de la capture d'informations de contenu de l'élément d'interface cible (22) ;
si les informations de contexte ne satisfont pas à la condition de capture, envoyer des informations d'échec d'acquisition au programme de recherche.
